# EUROPEAN PATENT APPLICATION

(11) **EP 2 320 149 A1**
(43) Date of publication of application: **11.05.2011**
(21) Application number: 09797873.8
(22) Date of filing: 10.07.2009
(51) Int. Cl.: F24F 6/06, F24F 6/00

(54) **HUMIDIFYING DEVICE**

(30) Priority: 14.07.2008 JP 2008182573
(71) Applicant: Daikin Industries, Ltd., Osaka 530-8323 (JP)
(72) Inventor: NAGAO, Mitsuhisa, Kusatsu-shi Shiga 525-0044 (JP)
(74) Representative: Goddar, Heinz J.
(86) International application number: PCT/JP2009/062607
(87) International publication number: WO 2010/007948

(57) **Abstract**

A water tray (90) is divided by a partition wall (91) into a downstream part (92) subjected to an air pressure on a downstream side of an air cleaning filter unit (30) and an upstream part (93) subjected to an air pressure on an upstream side of the air cleaning filter unit (30). The downstream part (92) and the upstream part (93) are made to communicate with each other through a water passage hole (95) on lower part of the partition wall (91). A differential pressure between the upstream side and the downstream side of the air cleaning filter unit (30) increases according to increase in a rotation velocity of a fan (20), a water level in the downstream part (92) is thereby increased, so that a quantity of water drawn up by bucket parts (61) can automatically be adjusted.

## Description

### TECHNICAL FIELD

The present invention relates to a humidifying device.

### BACKGROUND ART

There has conventionally been known a humidifying device disclosed in JP 2003-294277 A (Patent Literature 1).

In the conventional humidifying device, a fan, a heater, and an evaporating filter are provided in order of mention from upstream side in a casing having a suction opening and a blow-off opening. The evaporating filter is composed of a disc-like humidifying rotor having paddle parts provided therearound, and the paddle parts dip up water from a water tray and sprinkle water on the humidifying rotor so that a humidifying operation is performed.

In the conventional humidifying device, however, it is impossible to automatically vary a quantity of water sprinkled on the humidifying rotor by change in rotation velocity of the fan and resultant change in quantity of air flow. Therefore, conventionally, the quantity of water sprinkled from the paddle parts has to be increased by increase in rotation velocity of the evaporating filter according to increase in the rotation velocity of the fan, and thus there has been a problem of complicated control.

### CITATION LIST

### PATENT LITERATURE

PATENT LITERATURE 1: JP 2003-294277 A, Figs. 1 and 2

### SUMMARY OF INVENTION

### TECHNICAL PROBLEM

An object of the invention is to provide a humidifying device that is capable of automatically adjusting a quantity of water supply (e.g., quantity of sprinkled water, quantity of water impregnation, or the like) for a humidifying member according to a rotation velocity of a fan and that can easily be controlled.

### SOLUTION TO PROBLEM

In order to achieve the object, a humidifying device of the invention comprises:
a casing having suction openings and a blow-off opening,
a water tank provided in the casing,
a fan provided in the casing,
a humidifying member for performing humidification for air flow produced by the fan,
an air cleaning filter unit provided on upstream side of the humidifying member in the casing with respect to the air flow, and
a water tray that is provided under the humidifying member and the air cleaning filter unit and that receives water from the water tank,
the water tray comprising:
a downstream part that supplies the humidifying member with the water and that is subjected to an air pressure on downstream side of the air cleaning filter unit,
an upstream part that is subjected to an air pressure on upstream side of the air cleaning filter unit,
a partition wall for attaining partition between the downstream part and the upstream part, and
a water passage hole provided on lower part of the partition wall.

According to the humidifying device of the invention, the water tray is partitioned by the partition wall into the downstream part subjected to the air pressure on the downstream side of the air cleaning filter unit and the upstream part subjected to the air pressure on the upstream side of the air cleaning filter unit, and the downstream part and the upstream part communicate with each other through the water passage hole.

A difference in air pressure between the upstream side and the downstream side of the air cleaning filter unit increases according to increase in a rotation velocity of the fan. Accordingly, a water level in the downstream part subjected to the air pressure on the downstream side of the air cleaning filter unit increases according to the increase in the rotation velocity of the fan, and thus a quantity of water supply (e.g., quantity of sprinkled water, quantity of water impregnation, or the like) for the humidifying member can automatically be adjusted according to the rotation velocity of the fan.

Thus the quantity of water supply for the humidifying member and a quantity of humidification can automatically be adjusted according to the rotation velocity of the fan, so that control is facilitated.

In an embodiment, the humidifying device comprises:
a water sprinkling device that is formed of a rotation frame provided with bucket parts for drawing up the water from the downstream part of the water tray and that sprinkles the water on the humidifying member from openings of the bucket parts, and
a motor for rotating the rotation frame of the water sprinkling device.

According to the embodiment, the rotation frame of the water sprinkling device is rotated by the motor, and the bucket parts thereby draw up water from the downstream part of the water tray and sprinkle the water on the humidifying member.

According to increase in the rotation velocity of the fan, that is, increase in quantity of air flow through the air cleaning filter unit, the water level in the downstream part subjected to the air pressure on the downstream side of the air cleaning filter unit increases, the quantity of water drawn up by the bucket parts increases, and the quantity of sprinkled water for the humidifying member increases.

Thus the quantity of sprinkled water for the humidifying member from the bucket parts and the quantity of humidification can automatically be adjusted according to the rotation velocity of the fan, so that the control is facilitated.

In an embodiment, the water passage hole on the partition wall of the water tray comprises a horizontally long slot.

According to the embodiment, the horizontally long slot provided on the lower part of the partition wall of the water tray resists being exposed to air even when the water level is lowered, and water can quickly be supplied from the upstream part through the horizontally long slot to the downstream part according to the difference in air pressure between the upstream side and the downstream side of the air cleaning filter unit.

According to the embodiment, therefore, a speed of response for the automatic adjustment of the water level in the downstream part can be increased.

In an embodiment, the humidifying device comprises:
a buffer water container part into which the water flows from the upstream part of the water tray once a water level in the upstream part has a height not less than a predetermined value.

When the fan is stopped, elimination of the differential pressure between the upstream side and the downstream side of the air cleaning filter unit causes the water to return from the downstream part through the water passage hole to the upstream part in the water tray and increases the water level in the upstream part.

According to the embodiment, however, the water flows from the upstream part into the buffer water container part once the water level in the upstream side part has a height not less than the predetermined value.

Therefore, overflow of the water from the upstream part to outside can be prevented when the fan is stopped.

In an embodiment, lower part of the humidifying member can be immersed in the water in the downstream part of the water tray.

According to the embodiment, the water level in the downstream part increases according to increase in the rotation velocity of the fan, that is, increase in the quantity of air flow through the air cleaning filter unit. Therefore, a drying operation can be performed with the lower part of the humidifying member prevented from being submerged in the water when the rotation velocity of the fan is not higher than a predetermined set value, while a humidifying operation can be performed with the lower part of the humidifying member submerged in the water when the rotation velocity of the fan is higher than the set value. Accordingly, the rotation velocity of the fan is set at a value not more than the set value after an end of the humidifying operation, and thus the drying operation can be performed with the humidifying member prevented from being submerged in the water so as to keep the humidifying member clean.

An area (quantity of submersion) of the lower part of the humidifying member that is submerged in the water increases according to increase in the quantity of air flow, and thus the quantity of humidification can automatically be adjusted so as to increase according to the increase in the quantity of air flow.

In an embodiment, lower part of the humidifying member is immersed in the water in the downstream part of the water tray, and wherein
the humidifying member can be rotated,
the humidifying device further comprising a motor for rotating the humidifying member.

According to the embodiment, the humidifying member is rotated by the motor, and the lower part of the humidifying member is submerged in water in the downstream part of the water tray. Accordingly, the area of the humidifying member that is submerged in the water sequentially shifts and varies, and the area having been submerged in the water turns into an upper area with rotation of the humidifying member, so that the quantity of humidification can be increased with the whole humidifying member impregnated with the water.

In an embodiment, the water sprinkling device and the motor for rotating the rotation frame of the water sprinkling device are provided, and lower part of the humidifying member is immersed in the water in the downstream part of the water tray when a rotation velocity of the fan is higher than a predetermined set value.

According to the embodiment, the humidifying member is sprinkled with water by the water sprinkling device so that humidification is performed when the rotation velocity of the fan is not higher than the predetermined set value, that is, when the quantity of air flow is small. When the rotation velocity of the fan is higher than the predetermined set value, on the other hand, the humidifying member is sprinkled with water by the water sprinkling device and is immersed in the water in the downstream side part of the water tray. When the rotation velocity of the fan is higher than the predetermined set value, that is, when the quantity of air flow through the air cleaning filter unit is large, accordingly, the quantity of humidification can be increased by the water sprinkling for the humidifying member by the water sprinkling device and the submersion of the humidifying member in the water in the downstream part of the water tray.

In an embodiment, the humidifying member is mounted in the rotation frame so as to rotate together with the rotation frame.

In the embodiment, the humidifying member is mounted on the rotation frame, and thus the humidifying member can simply and inexpensively be rotated by the motor for rotating the rotation frame of the water sprinkling device. Besides, a wide area on the humidifying member can be submerged in the water with rotation of the humidifying member, so that the quantity of humidification can be increased.

In an embodiment, the humidifying member comprises a plurality of separable parts, and wherein the plurality of parts differ in height of lower ends thereof.

According to the embodiment, the plurality of parts having the different heights of the lower ends are sequentially immersed in the water in the downstream part of the water tray according to increase in the quantity of air flow, and thus the quantity of humidification can be increased according to the quantity of air flow.

According to the embodiment, in which the humidifying member is composed of the plurality of separable parts having the different heights of the lower ends, the part that has the lowest height of the lower end, that is immersed in the water for the longest period of time, and that is the pronest to be soiled has only to be replaced, while there is no need to replace the parts having comparatively great heights of the lower ends, that are immersed in the water for short periods of time, and that resist being soiled. Therefore, a replacement cost for the humidifying member can be reduced.

In an embodiment, the humidifying member has different heights of lower ends thereof along a transversal direction that is a horizontal direction orthogonal to a direction of passage of air.

According to the embodiment, the humidifying member has the different heights of the lower ends thereof along the transversal direction that is the horizontal direction orthogonal to the direction of the passage of air, and thus an area of the humidifying member in the transversal direction that is submerged in the water in the downstream part of the water tray and the quantity of humidification can be increased according to increase in the quantity of air flow through the air cleaning filter unit.

In an embodiment, the heights of the lower end of the humidifying member continuously vary along the transversal direction.

According to the embodiment, the heights of the lower end of the humidifying member continuously vary along the transversal direction, and thus the area of the humidifying member in the transversal direction that is submerged in the water in the downstream part of the water tray and the quantity of humidification can continuously be increased according to increase in the quantity of air flow through the air cleaning filter unit, so that the quantity of humidification can accurately be adjusted.

In an embodiment, heights of a lower end of the humidifying member differ along a thickness direction that is a direction of passage of air.

According to the embodiment, the heights of the lower end of the humidifying member differ along the thickness direction that is the direction of the passage of air, and thus an area of the humidifying member in the thickness direction that is submerged in the water can be adjusted according to increase in the quantity of air flow through the air cleaning filter unit. In particular, water escape from the humidifying member can be prevented, providing that the downstream part of the humidifying member is made to resist being submerged in the water with the upstream part made lower than the downstream part, for instance.

### ADVANTAGEOUS EFFECTS OF INVENTION

According to the invention, the water tray is provided with the partition wall for partition between the downstream part subjected to the air pressure on the downstream side of the air cleaning filter unit and the upstream part subjected to the air pressure on the upstream side of the air cleaning filter unit, and with the water passage hole on the lower part of the partition wall, and thus the quantity of water supply such as the quantity of sprinkled water and the quantity of impregnation with water for the humidifying member can automatically be adjusted, so that the quantity of humidification can automatically be adjusted and so that the control is facilitated.

### BRIEF DESCRIPTION OF DRAWINGS

Fig. 1 is a perspective view of an embodiment of a humidifying device of the invention;
Fig. 2 is a vertical section of the humidifying device of the embodiment;
Fig. 3 is a cross section of the humidifying device of the embodiment;
Fig. 4 is a front view of the humidifying device of the embodiment from which a front panel has been removed, as seen looking from a side of a water tank;
Fig. 5 is a schematic diagram showing a comparative example;
Fig. 6 is a schematic diagram showing a relation among a fan, a humidifying rotor, and a partition wall of the humidifying device of the embodiment;
Fig. 7 is a schematic diagram showing a relation among the humidifying rotor, a bell mouth, and the partition wall of the humidifying device of the embodiment;
Fig. 8 is a schematic diagram showing a relation among a humidifying rotor, a bell mouth, and a partition wall of a modification;
Fig. 9 is a view of a water sprinkling device as seen looking from a front side;
Fig. 10 is a perspective view of a rotation frame;
Fig. 11 is a perspective view showing an important part of a rotation frame;
Fig. 12 is a perspective view showing bucket parts;
Fig. 13 is an illustration showing a relation between a locus of an edge of an inner surface of a bucket part in vicinity of an opening on side of the humidifying rotor and the inner surface;
Fig. 14 is an illustration showing the humidifying rotor being sprinkled with water and motion of the water;
Fig. 15 is a perspective view of a water tray;
Figs. 16 (A) and 16 (B) are a table and a graph showing a result of a test for quantity of humidification in the humidifying device of the embodiment and the comparative example;
Fig. 17 is a front view of an important part of another embodiment of a humidifying device of the invention;
Fig. 18 is a front view of an important part of another embodiment of a humidifying device of the invention;
Fig. 19 is a front view of an important part of another embodiment of a humidifying device of the invention;
Fig. 20 is a front view of an important part of another embodiment of a humidifying device of the invention;
Fig. 21 is a front view of a humidifying member of another embodiment of a humidifying device of the invention;
Fig. 22 is a side view of a humidifying member of another embodiment of a humidifying device of the invention; and
Fig. 23 is a side view of a humidifying member of another embodiment of a humidifying device of the invention; and

### DESCRIPTION OF EMBODIMENTS

Hereinbelow, the invention will be described in detail with reference to embodiments shown in the drawings.

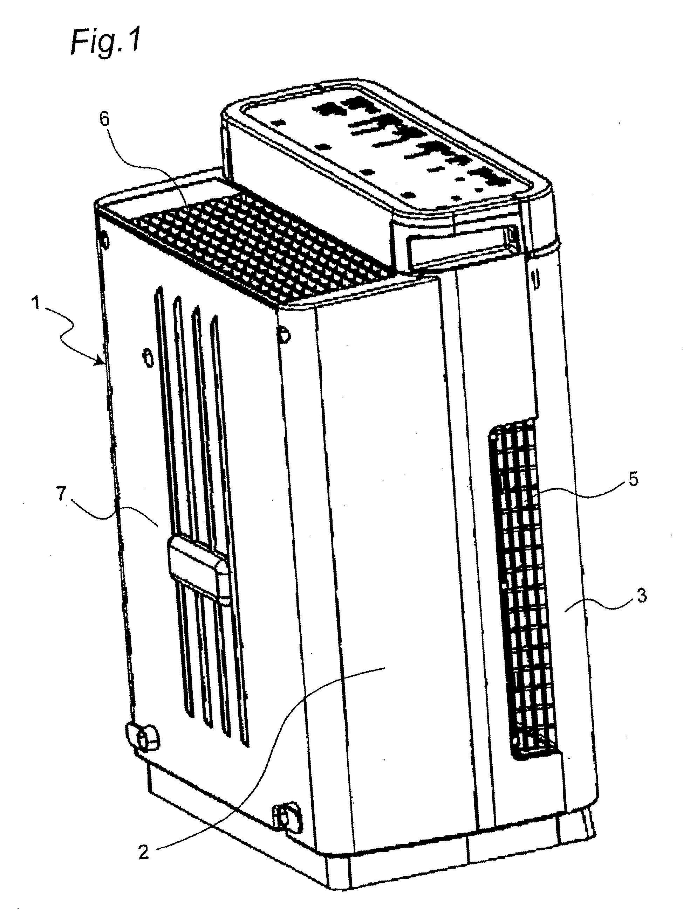

As shown in Fig. 1, this humidifying device has a casing 1, which is composed of a casing body 2 and a front panel 3 that is detachably attached to the casing body 2.

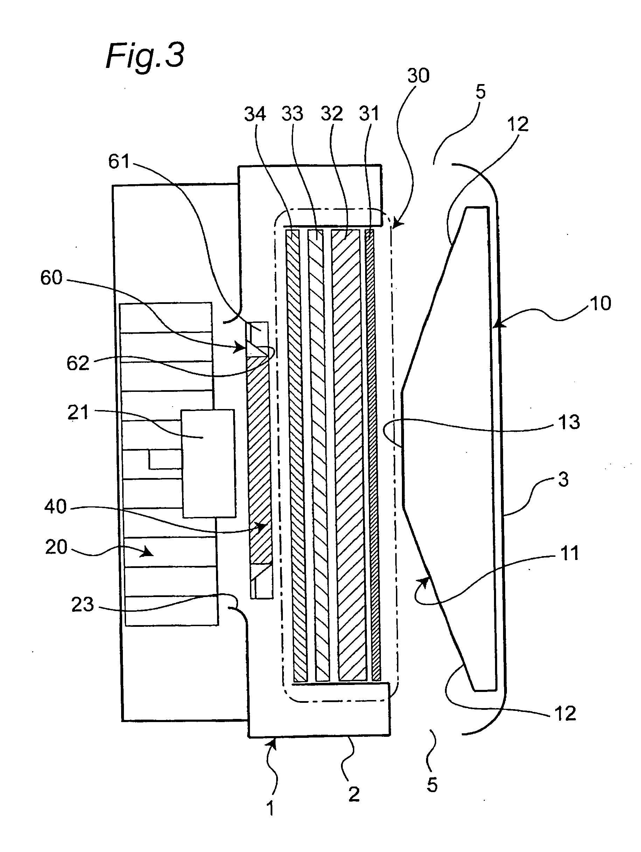

Suction openings 5, 5 are provided on both side faces of the casing 1 (see Fig. 3), and a blow-off opening 6 is provided on rear part of a top face of the casing 1.

In the humidifying device, in this manner, suction openings and blow-off openings are omitted on a rear face 7 of the casing 1 with the suction openings 5, 5 provided on the side faces of the casing 1 and with the blow-off opening 6 provided on the top face of the casing 1, and thus the rear face 7 of the casing 1 of the humidifying device can be brought into close contact with a wall surface of a room not shown, so that a degree of freedom for installation of the humidifying device is increased.

Conventional humidifying devices cannot be brought into close contact with a wall surface of a room and have small degrees of freedom for installation thereof because suction openings provided on a rear face of a casing thereof increase suction resistance unless a clearance with a certain degree of size is provided between the casing and the wall surface of the room.

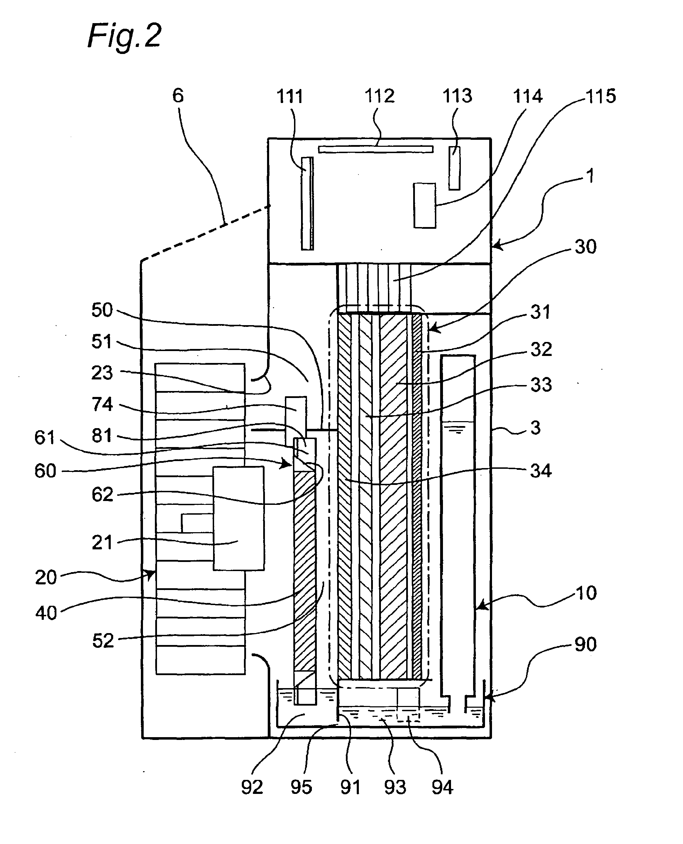

In the casing 1, as shown in Fig. 2, a water tank 10 is vertically placed on front side and a fan 20 that is driven by a fan motor 21 is placed on rear side. In the water tank 10, which has the same widely known structure as an oil tank of an oil heater has, a check valve not shown is provided on an outlet of bottom part, and is pressed and opened in a state in which the water tank 10 is vertically positioned. Between the water tank 10 and the fan 20, an air cleaning filter unit 30 and a humidifying rotor 40 as an example of a humidifying member are provided in order of mention from the front side.

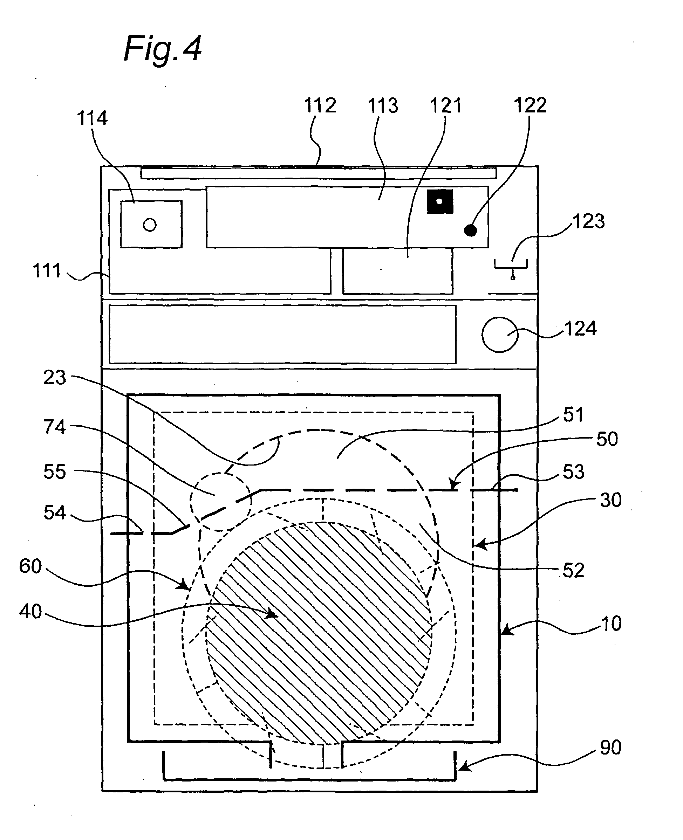

As shown in Figs. 2 and 4, the water tank 10 and the air cleaning filter unit 30 are generally rectangular in front view and overlap each other in generally most part thereof as seen looking in a front-to-back direction. Lower part of the air cleaning filter unit 30 and the humidifying rotor 40 overlap each other as seen looking in the front-to-back direction. The water tank 10, the air cleaning filter unit 30, and the humidifying rotor 40 are placed so as to overlap with at least a portion of a bell mouth 23 of the fan 20, i.e., so as to cover at least the portion of the bell mouth 23, and noises from the fan 20 are thereby reduced.

Herein the bell mouth 23 refers to a concept including an opening surrounded by the bell mouth 23, as well as the bell mouth 23 itself.

An order of frequency of maintenance, from the highest to the lowest, is the water tank 10, the air cleaning filter unit 30, and the humidifying rotor 40, in general. For instance, the water tank 10 has to be replenished with water everyday in general, the air cleaning filter unit 30 requiring cleaning or replacement once about every two weeks to a year and a half, the humidifying rotor 40 requiring replacement once about every two years. Among the water tank 10, the air cleaning filter unit 30, and the humidifying rotor 40, namely, the frequency of the water replenishment for the water tank 10 is the highest, the frequency of the cleaning, replacement or the like of the air cleaning filter unit 30 is the second highest, and the frequency of the cleaning and replacement of the humidifying rotor 40 is the lowest. That is, the order of frequency of maintenance operations, from the highest to the lowest, i.e., the water tank 10, the air cleaning filter unit 30, and the humidifying rotor 40, is an order of nearness to the front side of the casing 1, i.e., nearness to the front panel 3.

Thus the higher the frequency of maintenance of a member is, the nearer to the front side of the casing 1, i.e., the front panel 3, the member is placed, so that workability for the maintenance of the water tank 10, the air cleaning filter unit 30, and the humidifying rotor 40 is improved.

The air cleaning filter unit 30 includes a prefilter 31 for collecting large-size dust, hairs of pets and the like, an ionization part 32 for charging dust, motes and the like, a dust collection filter 33 for collecting the charged dust, motes and the like, the dust collection filter composed of, e.g., a pleat filter, and a deodorizing filter 34 for collecting malodorous components such as odors of cigarette, pets and the like. The prefilter 31, the ionization part 32, the dust collection filter 33, and the deodorizing filter 34 are arranged generally on a straight line, in an order of mention from the front side of the casing 1. Thus the water tank 10, the prefilter 31, the ionization part 32, the dust collection filter 33, the deodorizing filter 34, and the humidifying rotor 40 are arranged in an order of mention from the front side of the casing 1.

An order of frequency of maintenance, from the highest to the lowest, is the water tank 10, the prefilter 31, the ionization part 32, the dust collection filter 33, the deodorizing filter 34, and the humidifying rotor 40, in general. For instance, the water tank 10 has to be replenished with water everyday in general, a frequency of cleaning of the prefilter 31 is once about every two weeks, a frequency of maintenance of the ionization part 32 is once about a half year, a frequency of cleaning or replacement of the dust collection filter 33 is once about a year, a frequency of cleaning of the deodorizing filter 34 is once about a year and a half, and the humidifying rotor 40 requires replacement once about every two years. The order of frequency of maintenance, from the highest to the lowest, is the water tank 10; the prefilter 31, the ionization part 32, the dust collection filter 33, the deodorizing filter 34, and the humidifying rotor 40, this order coinciding with an order of nearness to the front side of the casing 1, i.e., nearness to the front panel 3.

Thus the higher the frequency of maintenance of a member is, the nearer to the front side of the casing 1, i.e., the front panel 3, the member is placed, so that workability for the maintenance of the water tank 10, the prefilter 31, the ionization part 32, the dust collection filter 33, the deodorizing filter 34, and the humidifying rotor 40 is improved because members having lower frequencies of maintenance works are prevented from interfering with members having higher frequencies of maintenance works.

The ionization part 32 is placed on upstream side of the humidifying rotor 40 with respect to air flow, and thus dust and motes deposited on the ionization part 32 are prevented from containing moisture from the humidifying rotor 40, so that failure of electric discharge can be prevented.

The deodorizing filter 34 is placed on upstream side of the humidifying rotor 40 with respect to air flow, and thus moisture from the humidifying rotor 40 is prevented from filling in absorption holes in the deodorizing filter 34, so that deterioration in deodorizing performance can be prevented.

The dust collection filter 33 is the pleat filter having a large surface area owing to pleats, and thus ventilation resistance therethrough can be decreased.

Rear surfaces of the water tank 10 are made to double as guide surfaces for guiding air sucked through the suction openings 5, 5, as shown in Fig. 3, so as to make separate guide members unnecessary and so as to reduce a size of the humidifying device in the front-to-back direction.

Specifically, the water tank 10 has a horizontal section generally shaped like a trapezoid as shown in Fig. 3, and the rear surfaces 11 are composed of slant surfaces 12, 12 on both sides and a flat surface 13 at center so that thicknesses of the tank gradually increase from side parts toward a center part thereof.

The slant surfaces 12, 12 on the rear surfaces 11 of the water tank 10 gradually guide air, sucked through the suction openings 5, 5 of the casing 1, toward the prefilter 31 of the air cleaning filter unit 30 and thereby reduce the ventilation resistance.

In place of the slant surfaces 12, 12, there may be used curved surfaces, not shown, for gradually guiding air from the suction openings 5 toward the prefilter 31.

The center part of the water tank 10 having the flat surface 13 has a thickness larger than the thicknesses of the side parts and thus the part that might be a dead space at center is effectively used as the center part of the water tank 10 so as to increase a capacity of the tank.

The prefilter 31, the ionization part 32, the dust collection filter 33, and the deodorizing filter 34 of the air cleaning filter unit 30, and the humidifying rotor 40 are arranged generally on a straight line so as to partially overlap one another as seen looking in the front-to-back direction, and a number of turns of air flow sucked through the suction openings 5 is thereby decreased so that the ventilation resistance is reduced.

As shown in Figs. 2 and 4, the deodorizing filter 34, the dust collection filter 33, and the like of the air cleaning filter unit 30 are made to overlap the whole bell mouth 23 of the fan 20, while the humidifying rotor 40 is made to overlap lower part of the bell mouth 23 without overlap with upper part of the bell mouth 23. Therefore, air flowing through a non-humidifying passage 51 extending from upper part of the deodorizing filter 34 to the upper part of the bell mouth 23 does not pass through the humidifying rotor 40, and thus a ventilation resistance against the air flowing through the non-humidifying passage 51 can be reduced, so that a sufficient quantity of air flow (quantity of air) can be ensured when only air cleaning operation is performed without performance of humidifying operation, in particular.

A partition plate 50 effects partition between a humidifying passage 52 extending from the lower part of the deodorizing filter 34 of the air cleaning filter unit 30 to the humidifying rotor 40 and the non-humidifying passage 51 extending from the upper part of the deodorizing filter 34 to the upper part of the bell mouth 23 for the fan 20.

The partition plate 50 prevents air flow from the humidifying passage 52 to the non-humidifying passage 51, that is, prevents air flow from the humidifying passage 52 from bypassing the humidifying rotor 40, and thus almost all of air flowing through the humidifying passage 52 is made to flow into the humidifying rotor 40, so that a great quantity of humidification can be attained.

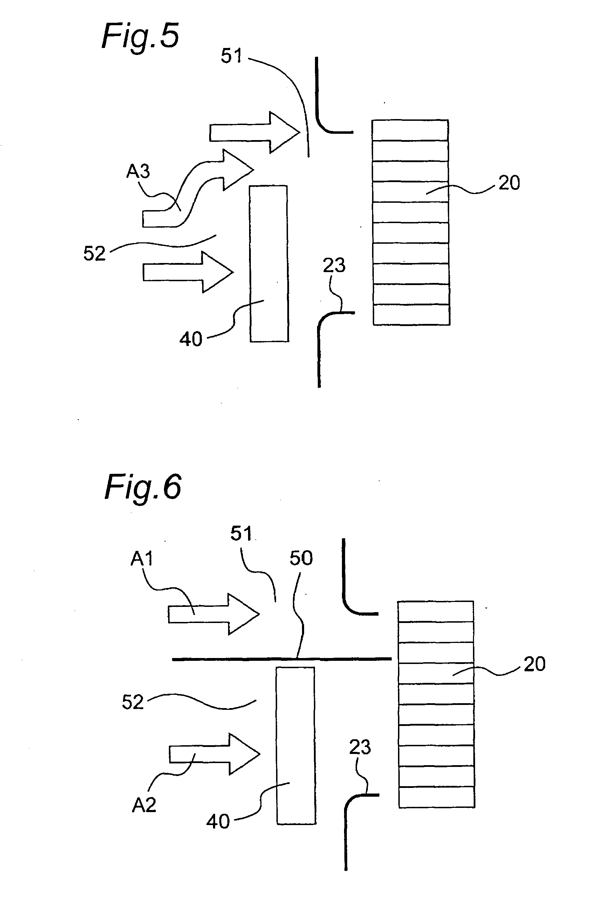

If it were not for the partition plate 50, air flow A3 flowing through the humidifying passage 52 would flow into the non-humidifying passage 51 and would bypass the humidifying rotor 40 as in a comparative example shown in a schematic diagram of Fig. 5, so that the quantity of humidification would be decreased.

The partition plate 50 extends from the deodorizing filter 34 of the air cleaning filter unit 30 to vicinity of the fan 20. Though not shown, alternatively, the partition plate 50 may extend from the deodorizing filter 34 to vicinity of the bell mouth 23.

This prevents turbulence that might be caused by collision between humidified air coming out of the humidifying rotor 40 and non-humidified air flowing through the non-humidifying passage 51, thus reduces ventilation resistance, and reduces noises.

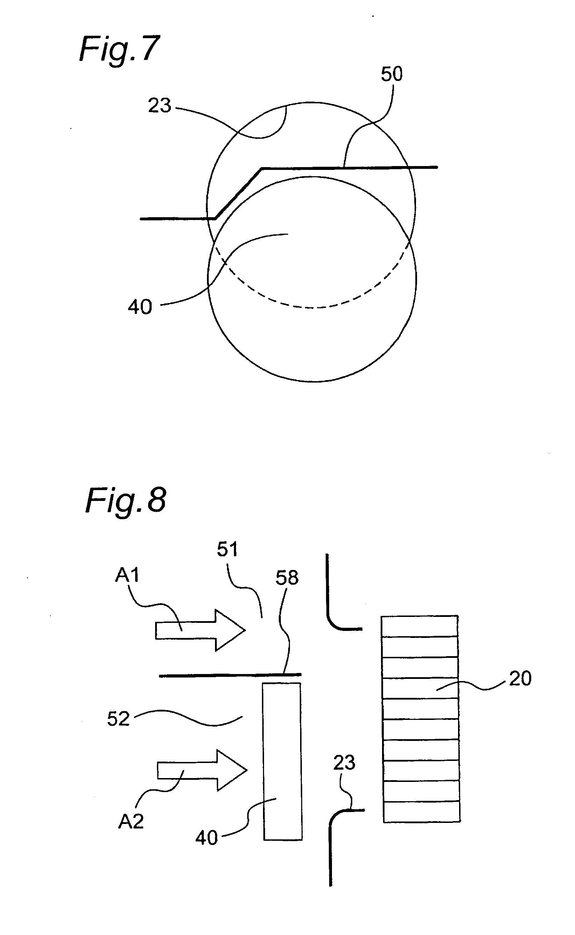

For specific description with reference to schematic diagrams of Figs. 6 and 7, separation between the non-humidifying passage 51 and the humidifying passage 52 by the partition plate 50 extending to the vicinity of the fan 20 prevents collision between air flow A1 flowing through the non-humidifying passage 51 and air flow A2 flowing through the humidifying passage 52, thus prevents turbulence that might be caused by the collision, and reduces the ventilation resistance and noises.

As shown in a modification of Fig. 8, a partition plate 58 may extend from the air cleaning filter unit 30 to the humidifying rotor 40.

With this configuration also, air flow that bypasses the humidifying rotor 40 can be prevented by the partition plate 58 and thus sufficient air can be passed through the humidifying rotor 40, so that a great quantity of humidification can be attained.

As shown in Fig. 4, the partition plate 50 is composed of horizontal parts 53, 54 and a slant part 55 linking the horizontal parts 53, 54 and extends along the humidifying rotor 40 and a water sprinkling device 60.

The humidifying rotor 40 is a so-called evaporating filter or the like composed of nonwoven fabric or the like, for instance, allows passage of air therethrough, and humidifies the passing air with evaporated moisture. As shown in Figs. 2 through 4, the humidifying rotor 40 is shaped like a disc and is fixed to the water sprinkling device 60.

As schematically shown in Figs. 2 and 3, bucket parts 61 of the water sprinkling device 60 are inclined so as to sprinkle water toward upstream side of the humidifying rotor 40 with respect to the air flow, that is, so that upstream side, with respect to the air flow, of inner surfaces 62 of the bucket parts 61 in vicinity of openings 81 and on side of the humidifying rotor 40 is in lower position when the humidifying rotor 40 is sprinkled with the water.

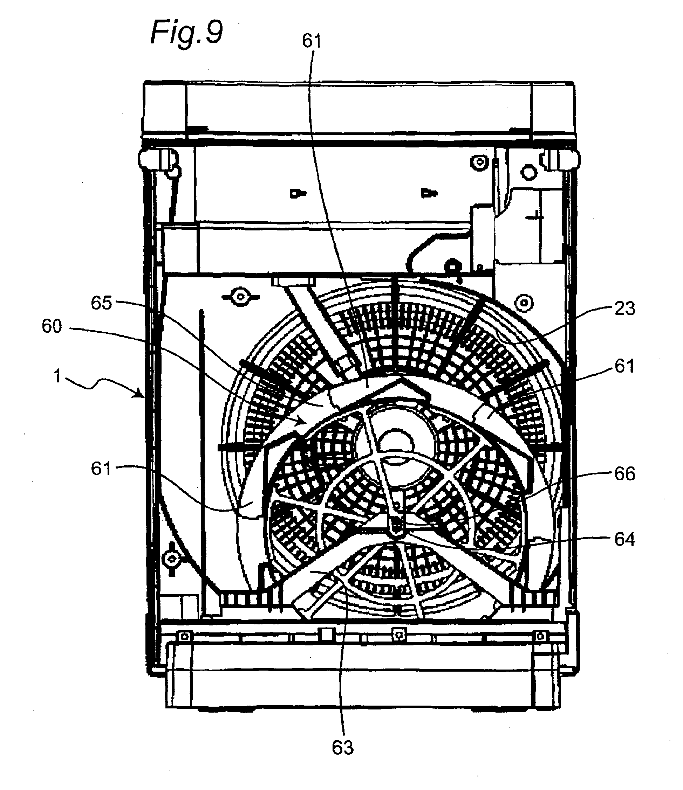

As shown in Fig. 9, the water sprinkling device 60 has a support leg part 63, a rotation frame 65, and the bucket parts 61, 61, .... The rotation frame 65 is mounted on the support leg part 63 so as to be rotatable along a vertical plane. More specifically, a boss part 66 at center of the rotation frame 65 is rotatably mounted on upper part of the support leg part 63 through a horizontal shaft 64.

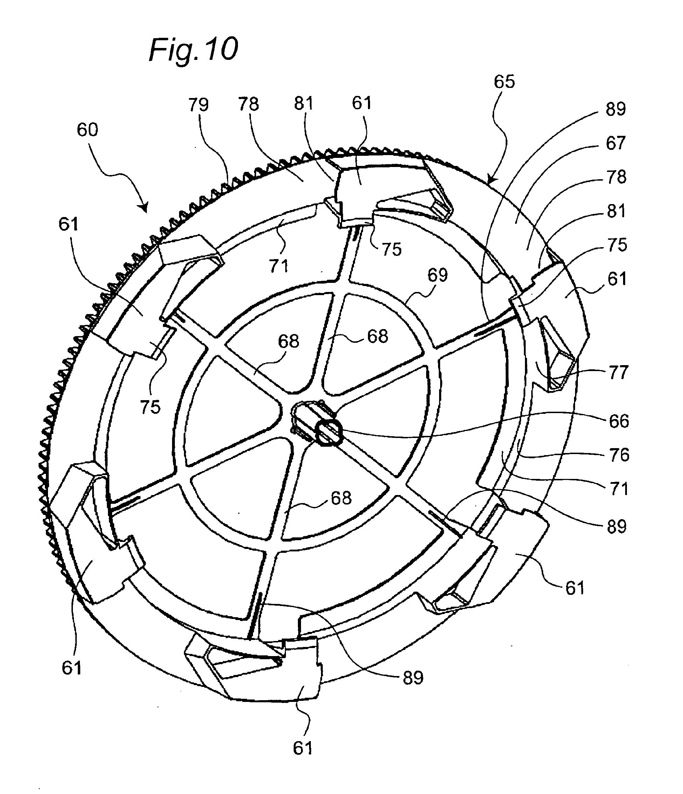

As shown in Fig. 10, the rotation frame 65 has the boss part 66, a ring-like disc part 67, and a plurality of radial arms 68, 68, ... linking the ring-like disc part 67 and the boss part. The arms 68, 68, ... are connected to one another by a ring part 69 for reinforcement.

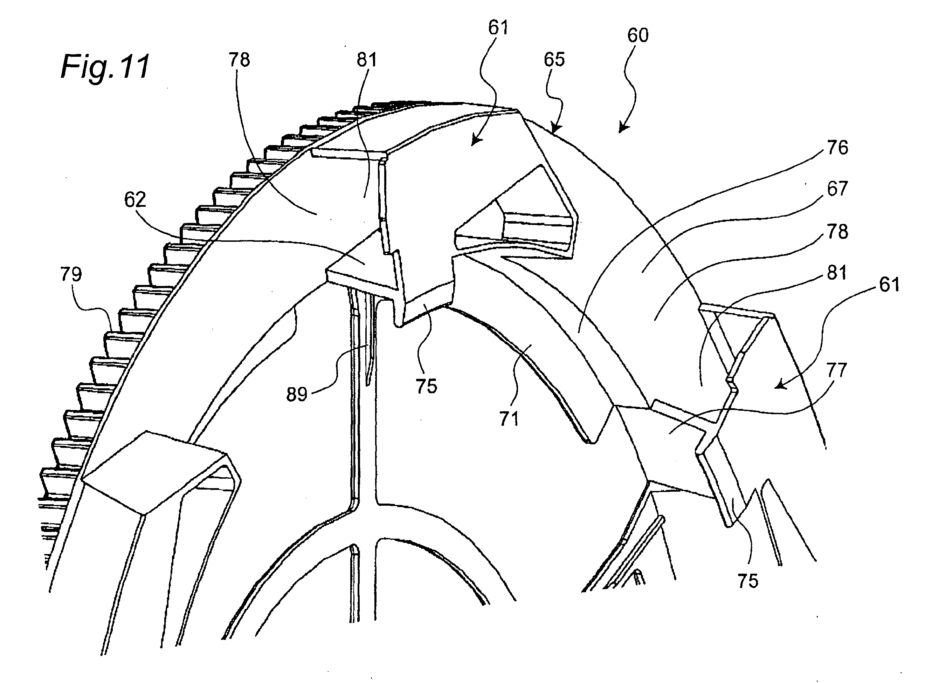

As shown in Figs. 10 and 11, the plurality of bucket parts 61, 61, ... are circumferentially provided at uniform intervals on one end surface of the ring-like disc part 67 of the rotation frame 65. Though the humidifying rotor 40 is not shown in Figs. 10 and 11, an outer circumferential surface of the humidifying rotor 40 is exposed from the rotation frame 65 between the bucket parts 61.

Thus water released from the bucket parts 61 can be made to permeate through the outer circumferential surface of the humidifying rotor 40 exposed from the rotation frame 65 between the bucket parts 61, so that the quantity of humidification can be increased.

A gear of a geared motor 74 as an example of a motor shown in Fig. 2 is made to mesh with a gear 79 formed on outer circumference of the ring-like disc part 67, so that the rotation frame 65 can be driven by the geared motor 74.

As shown in Fig. 2, the geared motor 74 is placed so as not to overlap the humidifying rotor 40 in the direction of the air flow, and thus the geared motor 74 is prevented from disturbing the air flow passing through the humidifying rotor 40.

Thus a quantity of air passing through the humidifying rotor 40 and the quantity of humidification can be increased.

On inner circumferential side of the ring-like disc part 67 of the rotation frame 65, as shown in Figs. 10 and 11 in detail, inner flange parts 71, 71, ... are intermittently provided, and holder pars 75 are provided that extend radially inward from vicinity of the openings 81 of the bucket parts 61 which openings face forward in a direction of rotation and that are generally shaped like nails. Both end surfaces of the humidifying rotor 40 shown in Figs. 2 and 3 and not shown in Figs. 10 and 11 are bound with and held by the inner flange parts 71, 71, ... and the holder parts 75, 75, ... of the ring-like disc part 67, and the outer circumference of the humidifying rotor 40 is held by an inner circumferential surface 76 of the ring-like disc part 67 and surfaces 77 on inner circumferential side of the bucket parts 61.

A linear rib 89 is provided on each of the arms 68, 68, ... of the rotation frame 65, and the humidifying rotor 40 is rotated together with the rotation frame 65 with the ribs 89 ingrowing in the humidifying rotor 40, though not shown.

The holder parts 75 not only hold the front surface of the humidifying rotor 40 but also double as water guides for guiding water, discharged from the openings 81 of the bucket parts 61, radially inward on the front surface of the humidifying rotor 40.

Thus the water discharged from the openings 81 of the bucket parts 61 is guided radially inward and rapidly on the front surface of the humidifying rotor 40 by the holder parts 75 and is thus rapidly spread over a wide area, so that the quantity of humidification can be increased.

As shown in Figs. 10 and 11, portions 78 of the ring-like disc part 67 that are forward of the openings 81 of the bucket parts 61 with respect to the rotational direction of the rotation frame 65 function as wall parts that block the water from the openings 81 from going rearward with respect to the air flow without going onto the humidifying rotor 40.

The wall parts 78 that are the portions of the ring-like disc part 67 prevent the water discharged from the openings 81 of the bucket parts 61 from going rearward from the humidifying rotor 40 together with the air flow without going onto the humidifying rotor 40 and guide the water from the openings 81 onto the humidifying rotor 40.

Accordingly, the wall parts 78 prevent water escape rearward from the humidifying rotor 40 so as to increase the quantity of humidification, and prevent water escape from the fan 20 and the blow-off opening 6.

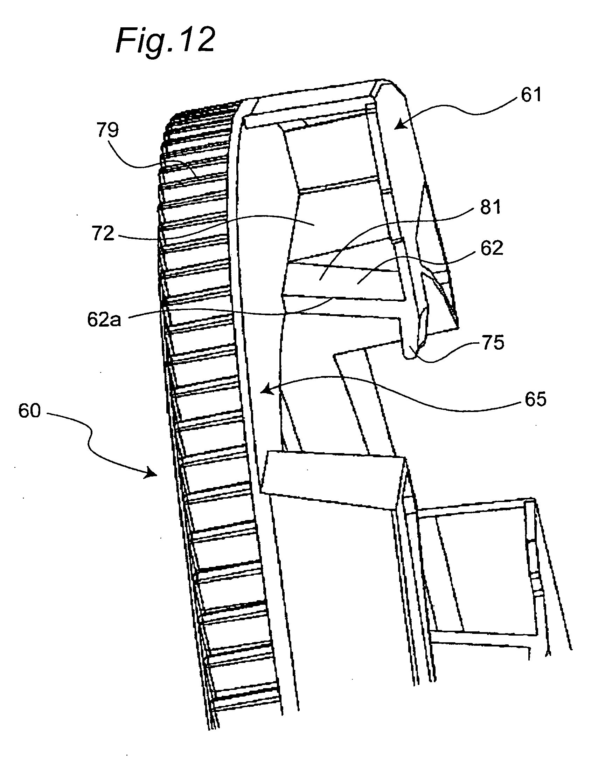

As shown in Figs. 2 and 12, the bucket parts 61 of the water sprinkling device 60 are inclined so that the upstream side, with respect to the air flow, of the inner surfaces 62 in vicinity of the openings 81 and on the side of the humidifying rotor 40 is in lower position when the humidifying rotor 40 is sprinkled with water.

Owing to the inclination of the inner surfaces 62 of the bucket parts 61 in vicinity of the openings 81 and on the side of the humidifying rotor 40 such that the upstream side thereof, with respect to the air flow, is in lower position when the humidifying rotor 40 is sprinkled with water from the openings 81, the water discharged from the openings 81 has a velocity component directed toward the upstream side with respect to the air flow. Thus the upstream part of the humidifying rotor 40 with respect to a direction of a thickness thereof is sprinkled with the water, and the sprinkled water is spread together with the air flow over downstream part of the humidifying rotor 40 with respect to the thickness direction and is consequently spread over the whole humidifying rotor 40 with respect to the thickness direction, so that a great quantity of humidification can be attained.

The inner surfaces on the side of the humidifying rotor 40 of each of the buckets 61 are formed of two steps, i.e., the inner surface 62 in vicinity of the opening 81 on the side of the humidifying rotor 40 and an inner surface 72 in a position deeper than the inner surface 62, in the embodiment shown in Fig. 12, whereas the inner surfaces on the side of the humidifying rotor 40 may be formed of one step composed of the inner surface 62 and an extension surface thereof.

As shown in Figs. 2 and 11, a width of the openings 81 of the bucket parts 61 in the thickness direction of the humidifying rotor 40 is smaller than the thickness of the humidifying rotor 40, and the openings 81 of the bucket parts 61 correspond to the upstream part of the humidifying rotor 40 with respect to the thickness direction (though not shown in Fig. 11, the humidifying rotor 40 is interposed between the inner flange parts 71 and the holder parts 75).

Thus the water discharged from the openings 81 of the bucket parts 61 is sprinkled on the upstream part of the humidifying rotor 40 with respect to the air flow in the thickness direction thereof, and is prevented from being directly sprinkled on the downstream part of the humidifying rotor 40 with respect to the air flow in the thickness direction.

Accordingly, the water is not only spread over the upstream part of the humidifying rotor 40 sprinkled with the water with respect to the thickness direction but also the sprinkled water is spread together with the air flow over the downstream part of the humidifying rotor 40 with respect to the thickness direction, so that the water is consequently spread over the whole humidifying rotor 40 with respect to the thickness direction, and so that a great quantity of humidification can be attained.

The water is prevented from being directly sprinkled on the downstream part of the humidifying rotor 40 with respect to the thickness direction, so that the water escape from the humidifying rotor 40 to the downstream side and thus the water escape from the fan 20 and the blow-off opening 6 can be prevented.

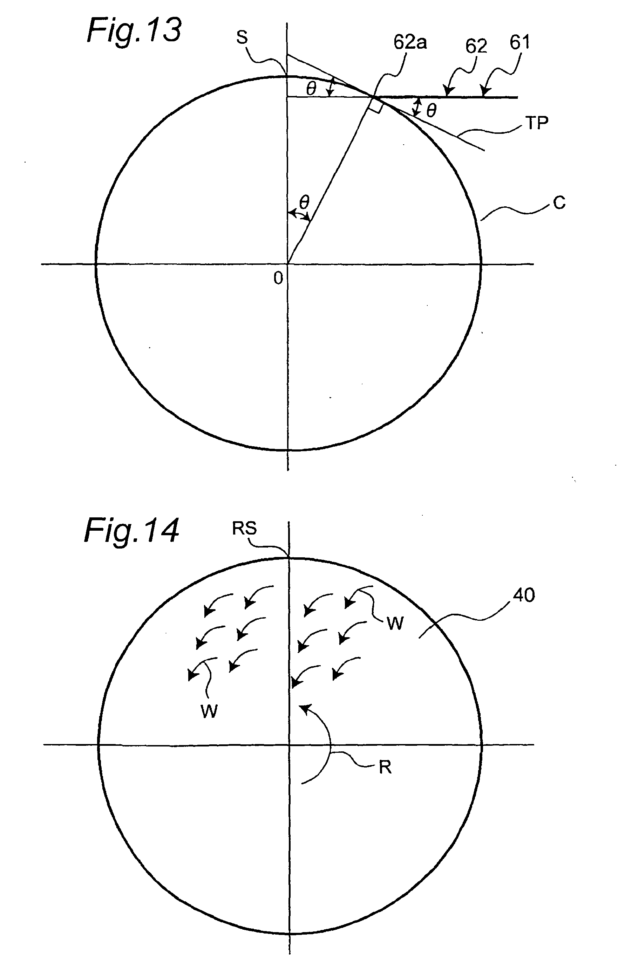

Fig. 13 is a schematic diagram representing a bucket part 61 sectioned in a direction perpendicular to a rotational center axis of the humidifying rotor 40 for description of the inclination of the inner surface 62 of the bucket part 61 on side of the humidifying rotor 40.

As seen from Figs. 12 and 13, the inner surface 62 of the bucket part 61 on the side of the humidifying rotor 40 is inclined at an acute angle θ counter to the humidifying rotor 40 relative to a tangent plane TP that is tangent to a circular conical surface C in three-dimensional representation (a circle in two-dimensional representation) which is a locus of an edge 62a of the inner surface 62 of the bucket part 61 of the water sprinkling device 60 in vicinity of the opening 81 on the side of the humidifying rotor 40 and that passes through the edge 62a of the inner surface 62 in vicinity of the opening 81 on the side of the humidifying rotor 40.

The inner surface 62 of the bucket part 61 in vicinity of the opening 81 on the side of the humidifying rotor 40 is inclined at the acute angle θ relative to the tangent plane TP and, as seen from Fig. 13, thus becomes horizontal when the edge 62a of the inner surface 62 of the opening 81 of the bucket part 61 makes a center angle θ (equal to the acute angle θ) about a rotational center O with a direction to a summit S of the locus circle C in two-dimensional representation before reaching the summit S.

As shown in Figs. 13 and 14, accordingly, the bucket parts 61 begin discharging water before reaching the summit S of the locus circle C and finish discharging all volume of the water in vicinity of a summit RS of the humidifying rotor 40.

Thus the water can be spread over a wide area on both sides of the summit RS of the humidifying rotor 40 and the quantity of humidification can be increased by combination of contrivance in which the bucket parts 61 begin discharging the water at an angle larger than the center angle θ before reaching the summit RS of the humidifying rotor 40 and finish discharging all the volume of the water in vicinity of the summit RS of the humidifying rotor 40 and contrivance in which the water sprinkled on the humidifying rotor 40 travels together with the humidifying rotor 40 forward in the rotational direction R as shown by arrows W in Fig. 14.

Though an optimum value of the acute angle θ varies according to a rotation velocity of the rotation frame 65 and a size of the humidifying rotor 40, the angle is preferably on order of 5 to 30 degrees, for instance.

As shown in Fig. 2, the water sprinkling device 60 is sized and positioned so that the humidifying rotor 40 is not immersed in water in the water tray 90 and so that the bucket parts 61 are capable of drawing up water from a draw-up part 92 that is a downstream part by being immersed in the water in the draw-up part 92. The downstream part 92 is subjected to an air pressure on downstream side of the air cleaning filter unit 30.

The humidifying rotor 40 is positioned so as not to be immersed in the water in the water tray 90, and thus a humidifying function is turned off, when the rotation frame 65 of the water sprinkling device 60 is stopped, so that the humidifying rotor 40 is not sprinkled with water from the bucket parts 61 and is prevented from being immersed in the water in the water tray 90 and absorbing the water.

Therefore, on-off control over the humidifying function can be attained by on-off control over the rotation of the rotation frame 65 by the geared motor 74.

In the water tray 90, as shown in Fig. 2, a partition wall 91 having a section in shape of an inverted letter "L" is provided for partition between the draw-up part 92 that is the downstream part and a non-draw-up part 93 that is an upstream part. The bucket parts 61 draw up water from the draw-up part 92. The non-draw-up part 93 that is the upstream part is subjected to an air pressure on upstream side of the air cleaning filter unit 30. The draw-up part 92 that is the downstream part is subjected to the air pressure on the downstream side of the air cleaning filter unit 30.

Upper part of the partition wall 91 is in close contact with lower parts of the prefilter 31, the ionization part 32, the dust collection filter 33, and the deodorizing filter 34 of the air cleaning filter unit 30, so that a differential pressure between the air pressure on the non-draw-up part 93 and the air pressure on the draw-up part 92 is caused by a resistance loss of air passing through the air cleaning filter unit 30.

A float switch 94 is provided in the non-draw-up part 93, and a display or an alarm indicating lack of water in the water tank 10 is provided by a display unit or an alarm unit not shown once the water level in the non-draw-up part 93 is lowered from a steady state by a specified value.

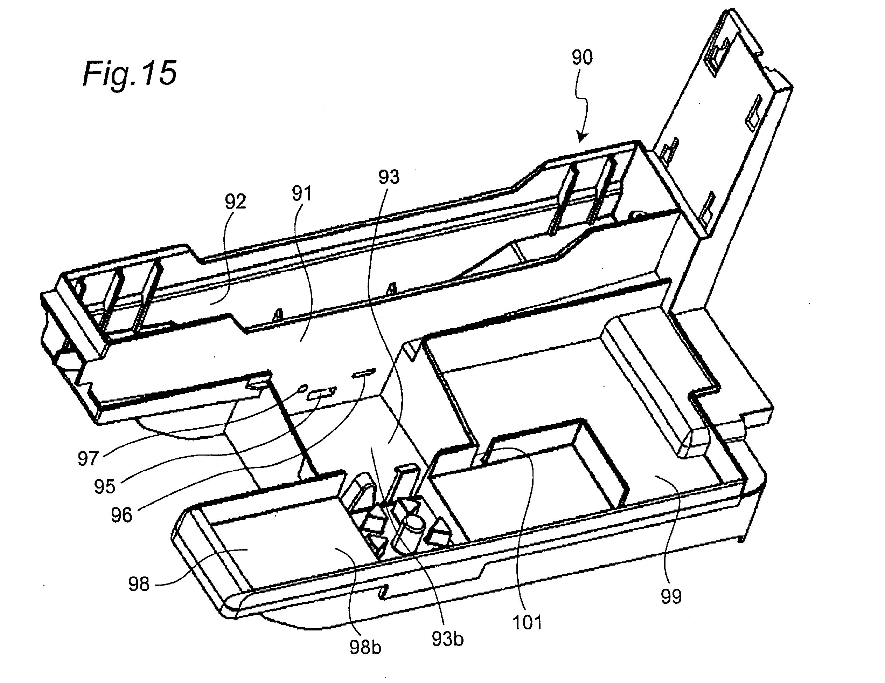

In the water tray 90, as shown more particularly in Fig. 15, the partition wall 91 (only a portion thereof is shown) is provided for the partition between the wide draw-up part 92 from which water is drawn up by the bucket parts 61 and the non-draw-up part 93 which is subjected to the air pressure on the upstream side of the air cleaning filter unit 30, and a horizontally long slot 95 as a water passage hole is provided on lower part of the partition wall 91.

When the differential pressure between the upstream side and the downstream side of the air cleaning filter unit 30 increases according to increase in the rotation velocity of the fan 20, the water level in the draw-up part 92 that is the downstream part becomes higher than the water level in the non-draw-up part 93 that is the upstream part, according to magnitude of the differential pressure, so that a quantity of water drawn up by the bucket parts 61 can automatically be adjusted according to the rotation velocity of the fan 20.

Therefore, a quantity of water sprinkled on the humidifying rotor 40 can automatically be adjusted according to the rotation velocity of the fan 20 and thus the quantity of humidification can easily and automatically be adjusted.

The horizontally long slot 95 provided on the partition wall 91 of the water tray 90 resists being exposed to air when the water level is lowered, quickly supplies water from the non-draw-up part 93 to the draw-up part 92, and thus increases a speed of response for the automatic adjustment of the water level in the draw-up part 92.

A water tank installation part 98 in which the water tank 10 is installed is provided in the non-draw-up part 93, and a height of a bottom surface 98b of the water tank installation part 98 is greater than a height of a bottom surface 93b of the non-draw-up part 93 in vicinity of the partition wall 91. On a peripheral wall of the water tank installation part 98 is provided a cutout 101 extending from an upper end thereof.

When suspension of the rotation of the fan 20 eliminates the differential pressure between the upstream side and the downstream side of the air cleaning filter unit 30, causes the water to return from the draw-up part 92 to the non-draw-up part 93, and makes the water level in the non-draw-up part 93 not less than a specified value, the water is discharged from the non-draw-up part 93 that is the upstream part through the cutout 101 into a buffer water container part 99 and thus overflow of the water from the non-draw-up part 93 that is the upstream part to outside is prevented.

In place of the cutout 101, through holes may be provided on upper parts of peripheral walls of the water tank installation part 98.

Reference numerals 111, 112, 113, 114, and 115 in Fig. 2 denote a printed circuit board for power supply, a printed circuit board for operation control, a printed circuit board for display, a dust sensor, and a reserve filter, respectively; numerals 121, 122, 123, and 124 in Fig. 4 denote a printed circuit board for high voltage, an odor sensor, a streamer, and a light receiving part, respectively; numerals 96 and 97 in Fig. 15 denote a hole for attachment of a case for antibacterial agent and a float attachment hole, respectively; however, those components have slight relations with purport of the invention and detailed description thereof is therefore omitted.

The humidifying device having the above configuration operates as follows.

When the fan 20 is driven by the fan motor 21 and when the rotation frame 65 of the water sprinkling device 60 is driven by the geared motor 74, air is sucked through the suction openings 5, 5 on the side faces 3 of the casing 1, as shown in Figs. 2 and 3. The sucked air has a direction of flow changed once by 90 degrees from between the rear surfaces 11 of the water tank 10 and the prefilter 31 of the air cleaning filter unit 30 toward the prefilter 31, thereafter flows straight in general in a horizontal direction through the prefilter 31, the ionization part 32, the dust collection filter 33, and the deodorizing filter 34 of the air cleaning filter unit 30, the humidifying rotor 40, and the fan 20 that are arranged generally on a straight line, thereby undergoes purification and humidification, thereafter has the direction of flow changed once by 90 degrees to a generally vertical upward direction when exiting from the fan 20, and is discharged through the blow-off opening 6 on the top face of the casing 1.

Thus the humidifying device has a small ventilation resistance because a number of turns of air flow sucked through the suction openings 5, 5 of the casing 1, i.e., the number of turns of an air passage is as small as two, in general, of once from the suction openings 5, 5 on the side faces 3 of the casing 1 to the prefilter 31 of the air cleaning filter unit 30 and once in the exit from the fan 20.

The air sucked through the suction openings 5, 5 of the casing 1 is gradually guided by the slant surfaces 12, 12 on both the sides of the rear surfaces 11 of the water tank 10 toward the prefilter 31 of the air cleaning filter unit 30, and thus undergoes little abrupt change in the direction thereof and the small ventilation resistance.

The purified air coming out of the upper part of the deodorizing filter 34 of the air cleaning filter unit 30 flows through the non-humidifying passage 51 separated from the humidifying passage 52 by the partition plate 50, passes through the upper part of the bell mouth 23 without passing through the humidifying rotor 40, and is drawn into the fan 20, while the purified air coming out of the lower part of the deodorizing filter 34 flows through the humidifying passage 52, passes through the humidifying rotor 40 so as to be humidified, passes through the lower part of the bell mouth 23, and is drawn into the fan 20.

In this manner, the air flowing through the non-humidifying passage 51 extending from the upper part of the deodorizing filter 34 to the upper part of the bell mouth 23 does not pass through the humidifying rotor 40, and thus the ventilation resistance against the air flowing through the non-humidifying passage 51 can be reduced. In particular, a sufficient quantity of air flow (quantity of air) can be ensured by presence of the non-humidifying passage 51 when only the air cleaning operation is performed without performance of the humidifying operation, with operation of the water sprinkling device 60 suspended by suspension of the geared motor 74.

The purified air flowing through the humidifying passage 52 is prevented by the partition plate 50 from flowing from the humidifying passage 52 into the non-humidifying passage 51 while bypassing the humidifying rotor 40, and thus almost all of air flowing from the lower part of the deodorizing filter 34 into the humidifying passage 52 is made to pass through the humidifying rotor 40. Thus the partition plate 50 extending from the deodorizing filter 34 to vicinity of the fan 20 prevents air flow from the humidifying passage 52 from bypassing the humidifying rotor 40, and thus a great quantity of humidification can be attained.

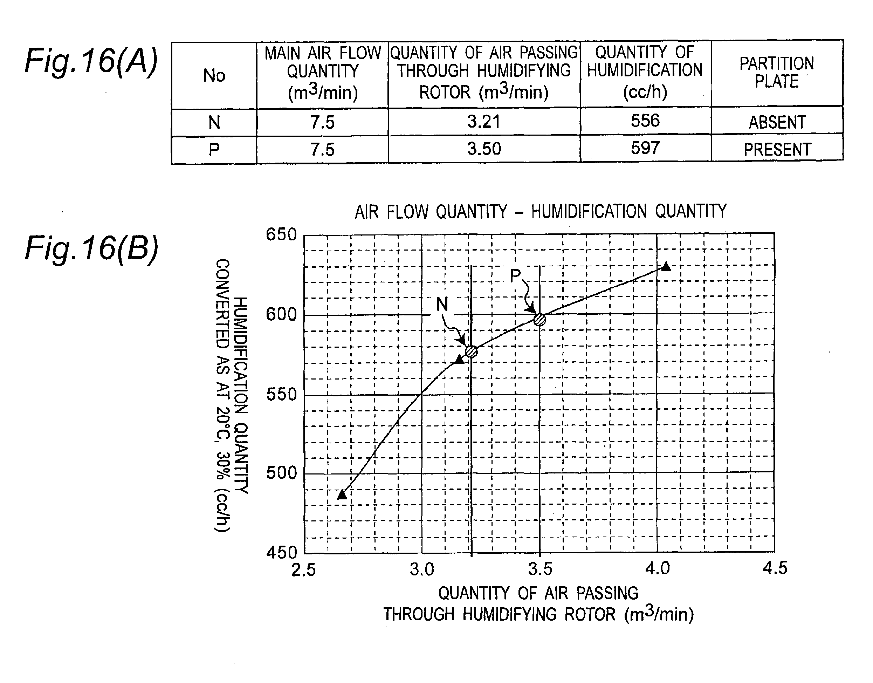

Figs. 16 (A) and 16 (B) are a table and a graph showing a result of a test for quantity of humidification in the embodiment and a comparative example.

In Figs. 16(A) and 16(B), reference character P denotes the embodiment and character N denotes the comparative example different from the embodiment only in that the partition plate 50 is removed from the embodiment.

On condition that quantities of air flow (quantities of main air flow) from the fan 20 in the embodiment P and the comparative example N were both 7.5 m³/min, as seen from Figs. 16 (A) and 16(B), a quantity of air passing through the humidifying rotor 40 in the embodiment increased to 3.50 m³/min from 3.21 m³/min in the comparative example N, and the quantity of humidification in the embodiment increased to 597 cc/h from 556 cc/h in the comparative example N.

A ratio of increase of the quantity of humidification in the embodiment P to that in the comparative example N is (597 - 556)/556 = 0.074.

In the embodiment P, namely, the quantity of humidification increased by about a little over 7% in comparison with that in the comparative example N.

The partition plate 50 extending from the deodorizing filter 34 of the air cleaning filter unit 30 to vicinity of the fan 20 prevents the collision between humidified air coming out of the humidifying rotor 40 and non-humidified air flowing through the non-humidifying passage 51 and thus prevents occurrence of turbulence. As a result, the ventilation resistance and noises can be decreased.

The humidifying rotor 40 shown in Fig. 2 is sprinkled with water from the openings 81 of the bucket parts 61 of the water sprinkling device 60. As shown in Figs. 2, 10, 11 and 12, specifically, the rotation frame 65 having the bucket parts 61, 61, ... is driven and rotated through the gear 79 by the geared motor 74, so that the bucket parts 61, 61, ... sequentially draw up water from the downstream part 92, i.e., the draw-up part 92, of the water tray 90 and sprinkle the water on the humidifying rotor 40.

Owing to the inclination of the inner surfaces 62 of the bucket parts 61 in vicinity of the openings 81 and on the side of the humidifying rotor 40 such that the upstream side thereof, with respect to the air flow; is in lower position when the humidifying rotor 40 is sprinkled with water from the bucket parts 61, as shown in Figs. 2 and 12, the water discharged from the openings 81 has a velocity component directed toward the upstream side with respect to the air flow. Thus the upstream part of the humidifying rotor 40 with respect to the direction of the thickness thereof is sprinkled with the water, and the sprinkled water is spread together with the air flow over the downstream part of the humidifying rotor 40 with respect to the thickness direction and is consequently spread over the whole humidifying rotor 40 with respect to the thickness direction, so that a great quantity of humidification can be attained.

As shown in Figs. 2 and 11, the width of the openings 81 of the bucket parts 61 in the thickness direction of the humidifying rotor 40 is smaller than the thickness of the humidifying rotor 40, and the openings 81 of the bucket parts 61 correspond to the upstream part of the humidifying rotor 40 with respect to the thickness direction, so that the water discharged from the openings 81 of the bucket parts 61 is sprinkled only on the upstream parts of the outer circumferential surface of the humidifying rotor 40 with respect to the air flow in the thickness direction thereof which parts are exposed between the bucket parts 61.

Accordingly, the water permeates through the humidifying rotor 40 from the outer circumferential surface of the upstream part of the humidifying rotor 40 sprinkled with the water with respect to the thickness direction, and the water having permeated through the upstream part is spread together with the air flow over the downstream part of the humidifying rotor 40 with respect to the thickness direction, so that the water is consequently spread over the whole humidifying rotor 40 with respect to the thickness direction, and so that a great quantity of humidification can be attained.

The water is prevented from being directly sprinkled on the downstream part of the humidifying rotor 40 with respect to the thickness direction, so that the water escape from the humidifying rotor 40 toward the downstream side and thus the water escape from the fan 20 and the blow-off opening 6 can be prevented.

As seen from Figs. 12 and 13, furthermore, the inner surfaces 62 of the bucket parts 61 on the side of the humidifying rotor 40 are inclined at the acute angle θ counter to the humidifying rotor 40 relative to the tangent planes TP that are tangent to the circular conical surface C which is the three-dimensional locus of the edges 62a of the inner surfaces 62 of the bucket parts 61 of the water sprinkling device 60 in vicinity of the openings 81 on the side of the humidifying rotor 40 and that pass through the edges 62a of the inner surfaces 62 in vicinity of the opening 81 on the side of the humidifying rotor 40, and thus the inner surfaces 62 of the bucket parts 61 in vicinity of the opening 81 on the side of the humidifying rotor 40 become horizontal when the edges 62a of the inner surfaces 62 of the bucket parts 61 in vicinity of the opening 81 make the center angle θ (equal to the acute angle θ) with a vertical axis before reaching the summit S of the locus circle C in sectional representation, as seen from the schematic section of Fig. 13, the inclination of the inner surfaces 62 relative to a horizontal plane thereafter gradually increasing with the rotation of the rotation frame 65.

As shown in Figs. 13 and 14, accordingly, the bucket parts 61 start discharging water before reaching the summit S of the locus circle C and finish discharging all volume of the water in vicinity of the summit RS of the humidifying rotor 40.

Therefore, the water can be spread over a wide area on both sides of the summit RS of the humidifying rotor 40 and the quantity of humidification can be increased, by combination of the contrivance in which the bucket parts 61 start discharging the water at an angle larger than the center angle θ before reaching the summit RS of the humidifying rotor 40 and finish discharging all the volume of the water in vicinity of the summit RS of the humidifying rotor 40 and the contrivance in which the water sprinkled on the humidifying rotor 40 travels together with the humidifying rotor 40 forward in the rotational direction R as shown by the arrows W in Fig. 14.

In addition, the water discharged from the openings 81 of the bucket parts 61 is rapidly guided radially inward on the front surface of the humidifying rotor 40 by the holder parts 75 shown in Figs. 10 through 12 so as to be rapidly spread over a wide area on the humidifying rotor 40.

Thus the quantity of humidification can be increased by the holder parts 75.

The holder parts 75 have a function as the water guides for increasing the quantity of humidification in addition to a function of holding the humidifying rotor 40.

The water discharged from the openings 81 of the bucket parts 61 is prevented from going rearward from the humidifying rotor 40 together with the air flow, by the wall parts 78 that are the portions of the ring-like disc part 67 of the rotation frame 65 forward of the openings 81, as shown in Figs. 10 and 11, and thereby falls toward the humidifying rotor 40.

Accordingly, the wall parts 78 prevent the water escape rearward from the humidifying rotor 40 so as to increase the quantity of humidification, and prevent the water escape from the fan 20 and the blow-off opening 6.

In the embodiment, an extremely great quantity of humidification can be attained by synergy of the contrivance in which the water sprinkled from the openings 81 of the bucket parts 61 onto the humidifying rotor 40 has the velocity component directed toward the upstream side with respect to the air flow, owing to the inclination of the inner surfaces 62 of the bucket parts 61 in vicinity of the openings 81 on the side of the humidifying rotor 40 such that the upstream side thereof with respect to the air flow is in lower position when the water is sprinkled, the contrivance in which the water from the openings 81 is sprinkled on the upstream parts of the humidifying rotor 40 with respect to the thickness direction because of the correspondence of the openings 81 of the bucket parts 61 to the upstream part of the humidifying rotor 40 with respect to the thickness direction, the contrivance in which the bucket parts 61 start discharging water before reaching the summit RS of the humidifying rotor 40 and finish discharging all volume of the water in vicinity of the summit RS of the humidifying rotor 40 because of the inclination of the inner surfaces 62 counter to the humidifying rotor 40 at the acute angle θ relative to the tangent planes TP that are tangent to the circular conical surface C which is the locus of the edges 62a of the inner surfaces 62 of the bucket parts 61 in vicinity of the opening 81 on the side of the humidifying rotor 40 and that pass through the edges 62a of the inner surfaces 62, the contrivance in which the water discharged from the openings 81 is rapidly guided radially inward on the front surface of the humidifying rotor 40 by the holder parts 75 provided in vicinity of the openings 81 of the bucket part 61, and the contrivance in which the water discharged from the openings 81 of the bucket parts 61 is blocked from going rearward from the humidifying rotor 40 together with the air flow and is made to fall toward the humidifying rotor 40, by the wall parts 78 of the rotation frame 65 forward of the openings of the bucket parts 61.

As shown in Fig. 2, the partition wall 91 blocks air from bypassing the air cleaning filter unit 30. The pressure difference between the upstream side and the downstream side of the air cleaning filter unit 30 is caused by the resistance loss of air passing through the prefilter 31, the ionization part 32, the dust collection filter 33, and the deodorizing filter 34 of the air cleaning filter unit 30. The pressure difference increases according to increase in the rotation velocity of the fan 20, that is, increase in the quantity of air flow.

The pressure on the upstream side of the air cleaning filter unit 30 and the partition wall 91 is generally equal to an atmospheric pressure, which acts on water in the upstream part 93, i.e., the non-draw-up part 93, of the water tray 90, while the pressure on the downstream side of the air cleaning filter unit 30 and the partition wall 91 is a low pressure lower than the atmospheric pressure by a value corresponding to the resistance loss, the low pressure acting on water in the downstream part 92, i.e., the draw-up part 92, of the water tray 90. There is the pressure difference described above between the generally atmospheric pressure acting on the water in the non-draw-up part 93 of the water tray 90 and the low pressure acting on the water in the draw-up part 92.

The non-draw-up part 93 and the draw-up part 92 of the water tray 90 communicate with each other through the slot 95 on the lower part of the partition wall 91, and the water level in the draw-up part 92 of the water tray 90 is thereby made higher than the water level in the non-draw-up part 93 by a height corresponding to the pressure difference. The pressure difference increases according to increase in the rotation velocity of the fan 20, that is, increase in the quantity of air flow.

Accordingly, the water level in the draw-up part 92 increases according to increase in the rotation velocity of the fan 20, that is, increase in the quantity of air flow.

As a result, the bucket parts 61 of the water sprinkling device 60 are capable of drawing up water from the draw-up part 92 and sprinkling the water on the humidifying rotor 40 so that the quantity of the water drawn up increases according to increase in the rotation velocity (quantity of air flow) of the fan 20.

By such automatic adjustment in the water level in the draw-up part 92 according to the rotation velocity of the fan 20, the quantity of water sprinkled on the humidifying rotor 40 can automatically be adjusted according to the quantity of air flow (quantity of air) without control over the rotation velocity of the rotation frame 65 of the water sprinkling device 60, and thus the quantity of humidification can easily and automatically be adjusted. This simplifies the control over the rotation velocity of the rotation frame 65 of the water sprinkling device 60.

The automatic adjustment in the water level in the draw-up part 92 is performed by the supply of water to the draw-up part 92 through the slot 95 on the lower part of the partition wall 91 and thus can quickly be performed with a satisfactory response. In particular, the horizontally long slot 95 that resists being exposed to air is used, so that the automatic adjustment in the water level in the draw-up part 92 can be performed with a satisfactory response by quick supply of water through the slot 95.

Then suspension of the rotation of the fan 20 eliminates the differential pressure between the upstream side and the downstream side of the air cleaning filter unit 30, causes the water to return from the draw-up part 92 having had the higher water level to the non-draw-up part 93 having had the lower water level, and may make the water level in the non-draw-up part 93 not less than a specified value.

On this occasion, the water is discharged from the non-draw-up part 93 through the cutout 101 into the buffer water container part 99 and thus overflow of the water from the non-draw-up part 93 to outside is prevented.

Hereinbelow, the workability for the maintenance will be described.

The order of frequency of the maintenance, from the highest to the lowest, is the water tank 10, the prefilter 31, the ionization part 32, the dust collection filter 33, the deodorizing filter 34, and the humidifying rotor 40, in general, and is the same as the order of nearness to the front side of the casing 1, i.e., nearness to the front panel 3. For instance, the water tank 10 has to be replenished with water everyday in general, the frequency of cleaning of the prefilter 31 is once about every two weeks, the frequency of maintenance of the ionization part 32 is once about a half year, the frequency of cleaning of the dust collection filter 33 is once about a year, the frequency of cleaning of the deodorizing filter 34 is once about a year and a half, and the humidifying rotor 40 requires replacement once about every two years.

For the replenishment of the water tank 10 with water, the front panel 3 is detached from the casing body 2, the water tank 10 is then detached from the casing body 2, and the water tank 10 is replenished with water.

On this occasion, the air cleaning filter unit 30, the humidifying rotor 40, and the like, which are on the rear surface side of the water tank 10, do not interfere with the replenishment work of the water tank 10 with water.

This results in satisfactory workability for the maintenance of the water tank 10.

For cleaning work for the prefilter 31, the front panel 3 is detached from the casing body 2, the water tank 10 is then taken out, and the prefilter 31 is thereafter taken out and cleaned.

On this occasion, the ionization part 32, the dust collection filter 33, the deodorizing filter 34, and the humidifying rotor 40 are on the rear surface side of the prefilter 31 and are not required to be detached and taken out.

In this manner, the water tank 10 forward of the prefilter 31 has only to be detached for the cleaning of the prefilter 31, and the cleaning work for the prefilter 31 is facilitated.

Thus the higher the frequency of maintenance of a member is, the nearer to the front side of the casing 1, i.e., to the front panel 3, the member is placed, so that the workability for the maintenance of the water tank 10, the prefilter 31, the ionization part 32, the dust collection filter 33, the deodorizing filter 34, and the humidifying rotor 40 is improved because members having lower frequencies of maintenance works are prevented from interfering with members having higher frequencies of maintenance works.

The humidifying device of the embodiment has advantages in that the rear face of the casing 1 can be brought into close contact with a wall surface of a room and in that the degree of freedom for installation of the device is increased because the suction openings and blow-off openings are omitted on the rear face 7 of the casing 1 with the suction openings 5 provided on the side faces of the casing 1 and with the blow-off opening 6 provided on the top face of the casing 1.

In the humidifying device of the embodiment, air sucked through the suction openings 5, 5 on the side surface 3 of the casing 1 has the direction of flow changed once by 90 degrees from between the rear surfaces 11 of the water tank 10 and the prefilter 31 of the air cleaning filter unit 30 toward the prefilter 31, thereafter flows straight in general in the horizontal direction through the prefilter 31, the ionization part 32, the dust collection filter 33, and the deodorizing filter 34 of the air cleaning filter unit 30, the humidifying rotor 40, and the fan 20 that are arranged generally on the straight line, thereby undergoes purification and humidification, thereafter has the direction of flow changed once by 90 degrees to the vertical upward direction when exiting from the fan 20, and is discharged through the blow-off opening 6 on the top face of the casing 1, and thus the humidifying device of the embodiment has an advantage of the small ventilation resistance because the number of turns of the air passage is as small as two, in general, of once from the suction openings 5, 5 on the side faces 3 of the casing 1 to the prefilter 31 of the air cleaning filter unit 30 and once in the exit from the fan 20.

The humidifying device of the embodiment has the advantage of the small ventilation resistance because the air sucked through the suction openings 5, 5 of the casing 1 is gradually guided by the slant surfaces 12, 12 on both the sides of the rear surfaces 11 of the water tank 10 toward the prefilter 31 of the air cleaning filter unit 30, and thus undergoes little abrupt change in the direction.

In the humidifying device of the embodiment, the slant surfaces 12, 12 of the rear surfaces 11 of the water tank 10 are made to double as the guide surfaces, so that separate guide members are made unnecessary and so that the size of the humidifying device in the front-to-back direction can be reduced.

In the humidifying device of the embodiment, the center part of the water tank 10 having the flat surface 13 has the thickness larger than the thicknesses of the side parts having the slant surfaces 12, 12 and thus the part that might be a dead space at center can effectively be used so that the capacity of the tank can be increased.

In the humidifying device of the embodiment, the ionization part 32 is placed on the upstream side of the humidifying rotor 40 with respect to air flow, and thus dust and motes deposited on the ionization part 32 are prevented from containing moisture from the humidifying rotor 40, so that failure of electric discharge can be prevented.

In the humidifying device of the embodiment, the deodorizing filter 34 is placed on the upstream side of the humidifying rotor 40 with respect to air flow, and thus moisture from the humidifying rotor 40 is prevented from filling in the absorption holes in the deodorizing filter 34, so that deterioration in deodorizing performance can be prevented.

In the humidifying device of the embodiment, the pleat filter having the large surface area owing to the pleats is used as the dust collection filter 33, and thus the ventilation resistance therein can be decreased.

In the humidifying device of the embodiment, noises can be reduced because the humidifying rotor 40, the air cleaning filter unit 30, and the water tank 10 cover the bell mouth 23 with the humidifying rotor 40 overlapping with the portion of the bell mouth 23 and with the air cleaning filter unit 30 and the water tank 10 overlapping with the whole bell mouth 23.

In the humidifying device of the embodiment, a great quantity of humidification can be attained because the partition plate 50 prevents purified air from flowing from the humidifying passage 52 into the non-humidifying passage 51 while bypassing the humidifying rotor 40 and thus causes almost all of air flowing from the deodorizing filter 34 into the humidifying passage 52 to pass through the humidifying rotor 40.

The humidifying device of the embodiment prevents the collision between humidified air coming out of the humidifying rotor 40 and non-humidified air flowing through the non-humidifying passage 51, thus prevents the occurrence of turbulence and reduces the ventilation resistance and noises because the humidifying device includes the partition plate 50 extending from the deodorizing filter 34 of the air cleaning filter unit 30 to vicinity of the fan 20 or the bell mouth 23.

The humidifying device of the embodiment reduces the ventilation resistance and ensures a sufficient quantity of air flow (quantity of air) when only the air cleaning operation is performed without performance of the humidifying operation, in particular, because the humidifying rotor 40 overlaps with the part of the bell mouth 23 of the fan 20 and because the part of the air cleaning filter unit 30 overlaps with the remaining part of the bell mouth 23 of the fan 20 without the overlap of the humidifying rotor 40 therewith.

In the humidifying device of the embodiment, water discharged from the openings 81 has the velocity component directed toward the upstream side with respect to the air flow, the water is thus sprinkled on the upstream part of the humidifying rotor 40 with respect to the direction of the thickness thereof, and the sprinkled water is spread together with the air flow over the downstream part of the humidifying rotor 40 with respect to the thickness direction and is consequently spread over the whole humidifying rotor 40 with respect to the thickness direction, so that a great quantity of humidification can be attained because the inner surfaces 62 of the bucket parts 61 in vicinity of the openings 81 and on the side of the humidifying rotor 40 are inclined so that the upstream side thereof with respect to the air flow is in lower position when the water is sprinkled on the humidifying rotor 40 from the bucket parts 61.

In the humidifying device of the embodiment, having the openings 81 of the bucket parts 61 corresponding to the upstream part of the humidifying rotor 40 with respect to the thickness direction, the water discharged from the openings 81 of the bucket parts 61 is sprinkled on the upstream part of the outer circumferential surface of the humidifying rotor 40 with respect to the air flow in the thickness direction thereof, and the water having permeated through the upstream part of the humidifying rotor 40 with respect to the thickness direction is spread together with the air flow over the downstream part of the humidifying rotor 40 with respect to the thickness direction and is consequently spread over the whole humidifying rotor 40 with respect to the thickness direction, so that a great quantity of humidification can be attained.

In the humidifying device of the embodiment, the water escape from the humidifying rotor 40 to the downstream side and thus the water escape from the fan 20 and the blow-off opening 6 can be prevented because the water is prevented from being directly sprinkled on the downstream part of the humidifying rotor 40 with respect to the thickness direction.

In the humidifying device of the embodiment, water can be spread over a wide area on both the sides of the summit RS of the humidifying rotor 40 and the quantity of humidification can be increased by combination of the contrivance in which the discharge of all the volume of the water is finished in vicinity of the summit RS of the humidifying rotor 40 and the contrivance in which the water sprinkled on the humidifying rotor 40 travels together with the humidifying rotor 40 forward in the rotational direction R because the inner surfaces 62 of the bucket parts 61 in vicinity of the opening 81 on the side of the humidifying rotor 40 are inclined at the acute angle θ counter to the humidifying rotor 40 relative to the tangent planes TP that are tangent to the circular conical surface C which is the locus of the edges 62a of the inner surfaces 62 of the bucket part 61 of the water sprinkling device 60 in vicinity of the opening 81 on the side of the humidifying rotor 40 and that pass through the edges 62a of the inner surfaces 62 in vicinity of the opening 81 on the side of the humidifying rotor 40.

In the humidifying device of the embodiment, the water from the openings 81 can rapidly be guided radially inward on the front surface of the humidifying rotor 40 and can rapidly be spread over a wide area on the humidifying rotor 40, so that the quantity of humidification can be increased because the holder parts 75 that are positioned in vicinity of the openings 81 of the bucket parts 61, that hold the humidifying rotor 40 and that have the function as the water guides are provided on the rotation frame 65.

The humidifying device of the embodiment prevents the water escape rearward from the humidifying rotor 40 so as to increase the quantity of humidification and prevents the water escape from the fan 20 and the blow-off opening 6 because the water discharged from the openings 81 of the bucket parts 61 is blocked from going rearward from the humidifying rotor 40 together with the air flow, by the wall parts 78 of the rotation frame 65 that are forward of the openings 81.

In the humidifying device of the embodiment, an extremely great quantity of humidification can be attained by synergy of the contrivance in which the water sprinkled from the openings 81 of the bucket parts 61 onto the humidifying rotor 40 has the velocity component directed toward the upstream side with respect to the air flow, owing to the inclination of the inner surfaces 62 of the bucket parts 61 in vicinity of the openings 81 on the side of the humidifying rotor 40 such that the upstream side thereof with respect to the air flow is in lower position when the water is sprinkled, the contrivance in which the water from the openings 81 is sprinkled on the upstream parts of the humidifying rotor 40 with respect to the thickness direction because of the correspondence of the openings 81 of the bucket parts 61 to the upstream part of the humidifying rotor 40 with respect to the thickness direction, the contrivance in which the bucket parts 61 start discharging the water before reaching the summit RS of the humidifying rotor 40 and finish discharging all the volume of the water in vicinity of the summit RS of the humidifying rotor 40 because of the inclination of the inner surface 62 counter to the humidifying rotor 40 at the acute angle θ relative to the tangent planes TP that are tangent to the circular conical surface C which is the locus of the edges 62a of the inner surfaces 62 of the bucket parts 61 in vicinity of the opening 81 on the side of the humidifying rotor 40 and that pass through the edges 62a of the inner surfaces 62, the contrivance in which the water discharged from the openings 81 is rapidly guided radially inward on the front surface of the humidifying rotor 40 by the holder parts 75 provided in vicinity of the openings 81 of the bucket part 61, and the contrivance in which the water discharged from the openings 81 of the bucket parts 61 is blocked from going rearward from the humidifying rotor 40 together with the air flow and is made to fall toward the humidifying rotor 40, by the wall parts 78 of the rotation frame 65 forward of the openings of the bucket parts 61.

In the humidifying device of the embodiment, in which the outer circumferential surface of the humidifying rotor 40 is exposed from the rotation frame 65 between the bucket parts 61, the water can be made to permeate through the humidifying rotor 40 from the exposed outer circumferential surface of the humidifying rotor 40, so that the quantity of humidification can be increased.

In the humidifying device of the embodiment, the quantity of air passing through the humidifying rotor 40 and the quantity of humidification can be increased because the geared motor 74 for driving the gear 79 provided on the outer circumference of the rotation frame 65 is placed so as not to overlap the humidifying rotor 40 in the direction of the air flow and because the geared motor 74 is thereby prevented from disturbing the air flow passing through the humidifying rotor 40.

In the humidifying device of the embodiment, the on-off control over the humidifying function can be attained by the on-off control over the rotation of the rotation frame 65 by the geared motor 74 because the humidifying rotor 40 is placed so as not to be immersed in the water in the downstream part 92, i.e., the draw-up part 92 of the water tray 90.

In the humidifying device of the embodiment, the partition wall 91 separates the downstream part 92, i.e., the draw-up part 92 subjected to the air pressure on the downstream side of the air cleaning filter unit 30 and the upstream part 93, i.e., the non-draw-up part 93 subjected to the air pressure on the upstream side of the air cleaning filter unit 30, the slot 95 as the water passage hole is provided on the lower part of the partition wall 91 and, when the differential pressure between the upstream side and the downstream side of the air cleaning filter unit 30 increases according to increase in the quantity of air flow from the fan 20, the water level in the draw-up part 92 increases according to the magnitude of the differential pressure, so that the quantity of water drawn up by the bucket parts 61, the quantity of water sprinkled on the humidifying rotor 40, and the quantity of humidification can automatically be adjusted according to the increase in the quantity of air flow from the fan 20 without alteration in the rotation velocity of the rotation frame 65.

In the humidifying device of the embodiment, having the horizontally long slot 95 provided on the lower par of the partition wall 91 of the water tray 90, the horizontally long slot 95 resists being exposed to air, and the speed of response for the automatic adjustment of the water level in the draw-up part 92 can be increased by the quick supply of the water therethrough from the non-draw-up part 93 to the draw-up part 92.

In the humidifying device of the embodiment, the overflow of the water from the non-draw-up part 93 to the outside is prevented, when suspension of the rotation of the fan 20 eliminates the differential pressure between the upstream side and the downstream side of the air cleaning filter unit 30 and causes the water to return from the draw-up part 92 to the non-draw-up part 93, because there is provided the buffer water container part 99 into which the water flows from the non-draw-up part 93 through the cutout 101 once the water level in the upstream part 93, i.e., the non-draw-up part 93 becomes the predetermined value or values greater than that.

In the humidifying device of the embodiment, in which the water tank 10, the prefilter 31, the ionization part 32, the dust collection filter 33, the deodorizing filter 34, and the humidifying rotor 40 are provided generally on a straight line in the order of the frequency of the maintenance, from the highest to the lowest, from the front side of the casing 1, the workability for the maintenance of the water tank 10, the prefilter 31, the ionization part 32, the dust collection filter 33, the deodorizing filter 34, and the humidifying rotor 40 is satisfactory because members having lower frequencies of maintenance works are prevented from interfering with members having higher frequencies of maintenance works.

In the humidifying device of the embodiment, the fan 20 that is positioned on the rear side of the water tank 10, the air cleaning filter unit 30, and the humidifying rotor 40 does not interfere with the maintenance works such as the cleaning and replacement of the water tank 10, the air cleaning filter unit 30, and the humidifying rotor 40, and the workability for the maintenance is improved.

The blow-off opening 6 is provided on the top face of the casing 1 in the embodiment, whereas blow-off openings may be provided on the side faces of the casing or on both the top and side faces of the casing.

The air cleaning filter unit 30 in the embodiment includes the prefilter 31, the ionization part 32, the dust collection filter 33, and the deodorizing filter 34, whereas the air cleaning filter unit may include a bacteria removing filter in addition thereto or the ionization part 32, the deodorizing filter 34 and/or the like may be omitted therefrom. For instance, the air cleaning filter unit may include only the prefilter and the dust collection filter or may be composed of only a single filter.

Though the partition plate 50 is provided in the embodiment, the partition plate may be omitted.

Though the humidifying rotor 40 is used as a humidifying member in the embodiment, a stationary humidifying member separate from the water sprinkling device may be used instead so that upstream part of the stationary humidifying member may be sprinkled with water from the bucket parts provided on the rotation frame of the water sprinkling device.

Though the embodiment has both the configuration in which the inner surfaces 62 of the bucket parts 61 in vicinity of the openings 81 on side of the humidifying rotor 40 are inclined so that the upstream side thereof with respect to the air flow is in lower position when the water is sprinkled from the openings 81 of the bucket parts 61 on the humidifying rotor 40 and the configuration in which the openings 81 of the bucket parts 61 correspond to the upstream part of the humidifying rotor 40 with respect to the thickness direction, only either of the configurations may be provided or both the configurations may be omitted. The holder parts 75 and the wall parts 78 may be omitted.

Though the gear 79 is provided on the outer circumference of the rotation frame 65 in the embodiment, the rotation frame may be driven by a belt with a pulley part for the belt provided in place of the gear, or the rotation frame may directly be driven by a motor with a shaft of the motor connected to a center of the rotation frame.

In the embodiment, the partition wall 91 is provided in the water tray 90 for the partition between the draw-up part 92 and the non-draw-up part 93, and the slot 95 as the water passage hole is provided on the lower part of the partition wall 91, whereas the water passage hole may be one slit or round hole or a plurality of slits or round holes.

Though the embodiment is provided with the buffer water container part 99 into which the water flows from the non-draw-up part 93 through the cutout 101 once the water level in the upstream part 93, i.e., the non-draw-up part 93 becomes the predetermined value or values greater than that, the buffer water container part 99 and the cutout 101 may be omitted.

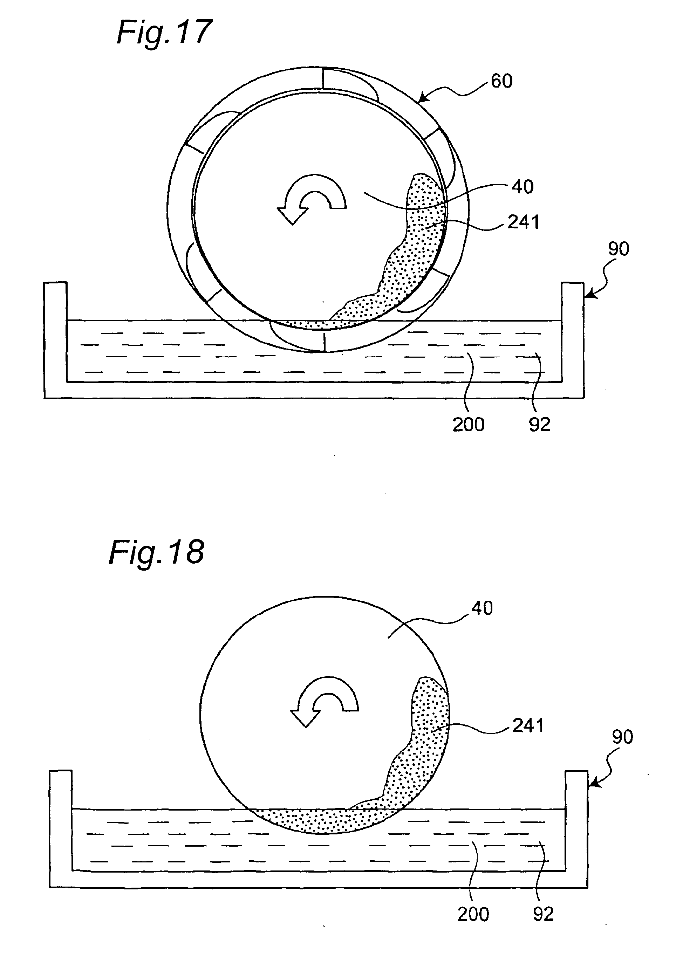

Fig. 17 shows an important part of another embodiment. The embodiment of Fig. 17 is different from the embodiment of Fig. 2 only in that the disc-shaped humidifying rotor 40 as an example of the humidifying member can be immersed in water 200 in the downstream part 92 of the water tray 90, and is the same as the embodiment of Fig. 2 in other configurations. For components of the embodiment of Fig. 17 that are the same as those of Fig. 2, the same reference numerals are used with quotation from Fig. 2 and detailed description thereof is omitted.

As shown in Fig. 17, lower part of the humidifying rotor 40 is immersed in the water 200 in the downstream part 92 of the water tray 90 when the rotation velocity of the fan 20 (see Fig. 2) is higher than a predetermined set value, that is, when a quantity of air flow through the air cleaning filter unit 30 (see Fig. 2) is greater than a predetermined set value, while the lower part of the humidifying rotor 40 is not immersed in the water 200 in the downstream part 92 of the water tray 90 when the rotation velocity of the fan 20 is not higher than the set value, that is, when the quantity of air flow through the air cleaning filter unit 30 is not greater than the set value.

When the rotation velocity of the fan 20 is not higher than the predetermined set value, that is, when the quantity of air flow is small, in the embodiment, the humidifying rotor 40 is above the water level in the downstream part 92 of the water tray 90 without being immersed in the water 200 and is sprinkled with the water 200 by the water sprinkling device 60 so as to perform humidification.

When the rotation velocity of the fan 20 is higher than the predetermined set value, that is, when the quantity of air flow through the air cleaning filter unit 30 is greater than the predetermined set value, on the other hand, the humidifying rotor 40 is not only sprinkled with water by the water sprinkling device 60 but also is immersed in the water 200 in the downstream part 92 of the water tray 90. When the rotation velocity of the fan 20 is higher than the predetermined set value, that is, when the quantity of air flow through the air cleaning filter unit 30 is large, the quantity of humidification can be increased by the sprinkling for the humidifying rotor 40 by the water sprinkling device 60 and impregnation of the lower part of the humidifying rotor 40 with the water by submersion thereof in the water 200 in the downstream part 92 of the water tray 90.

The part of the humidifying rotor 40 impregnated with the water 200 by the submersion thereof in the water 200 moves upward with the rotation of the humidifying rotor 40 so that the water is spread from the part impregnated with the water, and an area 241 over which the water has been spread moves upward with the rotation of the humidifying rotor 40 so that the water can be spread over the whole humidifying rotor 40.

Furthermore, the water level in the downstream part 92 of the water tray 90 increases according to increase in the rotation velocity of the fan 20, that is, increase in the quantity of air flow through the air cleaning filter unit 30, thus the quantity of water sprinkled on the humidifying rotor 40 by the water sprinkling device 60 and a quantity of the submersion of the humidifying rotor 40 in the water 200 increase according to the increase in the quantity of air flow, and the quantity of humidification can automatically be adjusted so as to increase according to the increase in the quantity of air flow.

Besides, the humidifying rotor 40 of which the lower part can be submerged in the water is mounted on the rotation frame 65 (see Fig. 10) of the water sprinkling device 60, and thus the humidifying rotor 40 can simply and inexpensively be rotated by the geared motor 74 for rotating the rotation frame 65 of the water sprinkling device 60, so that a wide area in the humidifying rotor 40 can be submerged in the water and so that the quantity of humidification can be increased.

Fig. 18 shows another embodiment, which is different from the embodiment of Fig. 17 only in that the embodiment of Fig. 18 is provided with no water sprinkling device and a motor (not shown) for rotating the humidifying rotor 40. Components in Fig. 18 that are the same as those of the embodiment of Fig. 17 are provided with the same reference numerals, and description thereof is omitted.

As shown in Fig. 18, the water level in the downstream part 92 of the water tray 90 increases according to increase in the rotation velocity of the fan 20 (see Fig. 2), that is, increase in the quantity of air flow through the air cleaning filter unit 30 (see Fig. 2), thus the quantity of the submersion of the humidifying rotor 40 in the water 200 increases according to the increase in the quantity of air flow, and the quantity of humidification can automatically be adjusted so as to increase according to the increase in the quantity of air flow.

With the humidifying rotor 40 rotated by the motor not shown, a part of the humidifying rotor 40 impregnated with the water 200 by the submersion in the water 200 moves upward with the rotation of the humidifying rotor 40, the water is spread from the part impregnated with the water, and an area 241 over which the water has been spread moves upward with the rotation of the humidifying rotor 40, so that the water can be spread over the whole humidifying rotor 40 and so that the quantity of humidification can be increased.

Though the humidifying rotor 40 is rotated by the motor, the humidifying rotor 40 may be made stationary with the motor omitted.

In this configuration, the water level in the downstream part 92 of the water tray 90 increases according to increase in the quantity of air flow through the air cleaning filter unit 30, and thus increase in width in a transversal direction (a horizontal direction orthogonal to a direction in which air is passed through the humidifying rotor 40) of an area of the disc-shaped humidifying rotor 40 which area is submerged in the water causes increase in the area impregnated with the water and increase in the quantity of humidification.

The water level in the downstream part 92 of the water tray 90 increases according to increase in the rotation velocity of the fan 20, that is, increase in the quantity of air flow through the air cleaning filter unit 30. Therefore, a drying operation can be performed with the lower part of the humidifying rotor 40 prevented from being submerged in the water when the rotation velocity of the fan 20 is not higher than a predetermined set value, while a humidifying operation can be performed with the lower part of the humidifying rotor 40 submerged in the water when the rotation velocity of the fan 20 is higher than the set value. After an end of the humidifying operation, accordingly, the rotation velocity of the fan 20 can be made to become the set value or lower values and thus the drying operation can be performed with the humidifying rotor 40 prevented from being submerged in the water so as to keep the humidifying rotor 40 clean.

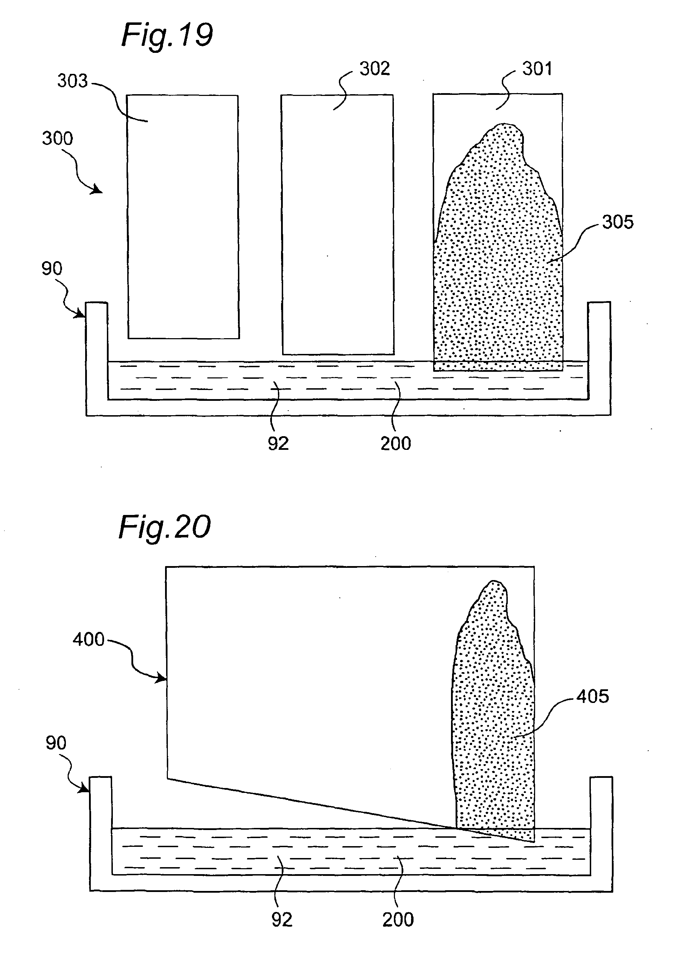

Fig. 19 shows another embodiment in which only a configuration of a humidifying member 300 is different from the configuration of the humidifying rotor 40 of Fig. 18 and in which other configurations are the same as those of the embodiment of Fig. 18. Therefore, components in Fig. 19 that are the same as those in Fig. 18 are provided with the same reference numerals, and description thereof is omitted.

As shown in Fig. 19, the humidifying member 300 is composed of a first part 301, a second part 302, and a third part 303 that are stationary and rectangular and that are arranged in a horizontal direction orthogonal to a direction of passage of air. The first part 301, the second part 302, and the third part 303 can be separated from one another and differ in height of lower ends thereof. The first part 301 has a height of the lower end that is the lowest, and is the pronest to be immersed in the water 200. The second part 302 has a height of the lower end that is the second lowest, and the third part 303 has a height of the lower end that is the highest, so that the second part 302 and the third part 303 are prone to be immersed in the water 200 to degrees in order of mention.

In the embodiment, the water level in the downstream part 92 of the water tray 90 varies according to the rotation velocity of the fan 20, that is, the quantity of air flow through the air cleaning filter unit 30, and the quantity of humidification can be increased by sequential immersion of the first part 301, the second part 302, and the third part 303 in the water 200 according to increase in the quantity of air flow.

In this configuration, the first part 301 of the humidifying member 300 has the lowest height of the lower end, is thus immersed in the water for a longer period of time than the second part 302 and the third part 303 are, and is proner to be soiled than the second part 302 and the third part 303. For instance, only the first part 301 may have a water impregnated area 305 and the second part 302 and the third part 303 may have no water impregnated areas.

In such a configuration, replacement cost can be reduced by replacement of only the first part 301 of the humidifying member 300 that is prone to be soiled, without replacement of the second part 302 and the third part 303 that resist being soiled.

Though the humidifying member 300 in the embodiment is composed of the separable three parts 301, 302, and 303 that differ in height of the lower ends thereof, the humidifying member may be composed of separable two or not less than four parts that differ in height of lower ends thereof.

Fig. 20 shows another embodiment in which only a configuration of a humidifying member 400 is different from the configuration of the humidifying member 300 of Fig. 19 and in which other configurations are the same as those of the embodiment of Fig. 19. Therefore, components in Fig. 20 that are the same as those in Fig. 19 are provided with the same reference numerals, and description thereof is omitted.

As shown in Fig. 20, the humidifying member 400 is shaped like a trapezoid in front view so that heights of a lower end thereof continuously differ along the transversal direction that is the horizontal direction orthogonal to the direction of passage of air.

In the embodiment having the humidifying member 400 shaped like a trapezoid in front view such that the heights of the lower end thereof continuously vary along the transversal direction, an area of the humidifying member 400 in the transversal direction that is submerged in the water 200 in the downstream part 92 of the water tray 90, a water impregnated area 405, and the quantity of humidification can continuously be increased according to increase in the quantity of air flow through the air cleaning filter unit 30 (see Fig. 2), so that the quantity of humidification can accurately be adjusted.

The water level in the downstream part 92 of the water tray 90 increases according to increase in the rotation velocity of the fan 20, that is, increase in the quantity of air flow through the air cleaning filter unit 30. Therefore, the drying operation can be performed with lower part of the humidifying member 400 prevented from being submerged in the water when the rotation velocity of the fan 20 is not higher than a predetermined set value, while the humidifying operation can be performed with the lower part of the humidifying member 400 submerged in the water when the rotation velocity of the fan 20 is higher than the set value. After an end of the humidifying operation, accordingly, the rotation velocity of the fan 20 can be made to become the set value or lower values and thus the drying operation can be performed with the humidifying member 400 prevented from being submerged in the water so as to keep the humidifying member 400 clean.

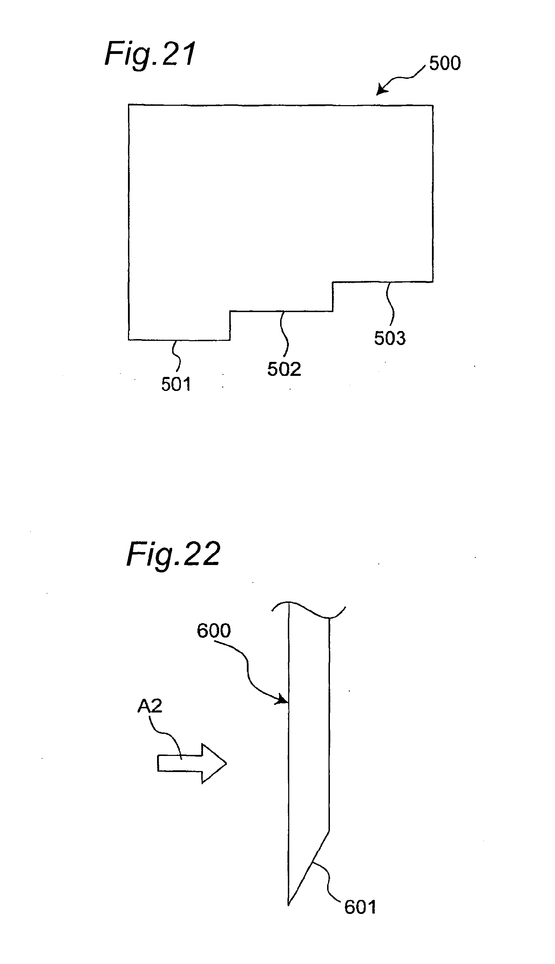

Fig. 21 shows an important part of another embodiment that is different from the embodiment of Fig. 20 having the heights of the lower end of the humidifying member 400 increasing continuously, only in that heights of lower ends 501, 502, 503 of a humidifying member 500 increase sequentially stepwise thereamong. Fig. 20 is quoted for components of the embodiment of Fig. 21 that are the same as those of Fig. 20.

In the embodiment of Fig. 21, having the heights of the lower ends 501, 502, 503 of the humidifying member 500 that vary stepwise, an area of the humidifying member 500 that is submerged in the water 200 in the downstream part 92 of the water tray 90, a water impregnated area, and the quantity of humidification can stepwise be increased according to increase in the quantity of air flow through the air cleaning filter unit 30 (see Fig. 2), so that the quantity of humidification can be adjusted.

Fig. 22 shows an important part of another embodiment that is different from the embodiment of Fig. 20 having the heights of the lower end of the humidifying member 400 increasing continuously along the transversal direction orthogonal to the direction of passage of air, only in that heights of a lower end 601 of a humidifying member 600 increase continuously from upstream side toward downstream side along a thickness direction that is a direction A2 of passage of air.

In the embodiment having the heights of the lower end 601 of the humidifying member 600 that increase continuously from the upstream side toward the downstream side along the thickness direction that is the direction A2 of passage of air, an area of the humidifying member 600 in the thickness direction that is submerged in the water 200 in the downstream part 92 of the water tray 90 can continuously be increased, a water impregnated area can continuously be increased from the upstream side toward the downstream side, and the quantity of humidification can continuously be increased according to increase in the quantity of air flow through the air cleaning filter unit 30 (see Fig. 2), so that the quantity of humidification can accurately be adjusted.

In the embodiment, the water escape can be prevented because the area of the lower end 601 of the humidifying member 600 that is submerged in the water increases continuously from the upstream side toward the downstream side with respect to the air flow A2, and because the downstream side of the humidifying member 600 in the thickness direction resists being impregnated with the water.

The heights of the lower end of the humidifying member, however, may be made to increase continuously from the downstream side toward the upstream side along the thickness direction that is the direction of passage of air, though not shown.

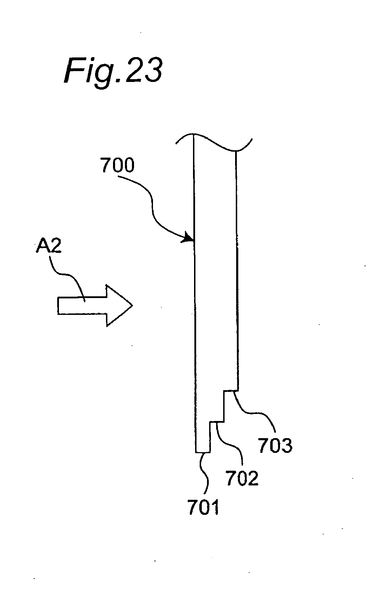

Fig. 23 shows an important part of another embodiment that is different from the embodiment of Fig. 22 having the heights of the lower end of the humidifying member 600 increasing continuously from the upstream side toward the downstream side along the direction A2 of passage of air, only in that heights of lower ends 701, 702, 703 of a humidifying member 700 increase stepwise from the upstream side toward the downstream side along the thickness direction that is the direction A2 of passage of air.

In the embodiment having the heights of the lower ends 701, 702, 703 of the humidifying member 700 increasing stepwise from the upstream side toward the downstream side along the thickness direction that is the direction A2 of passage of air, an area of the humidifying member 700 in the thickness direction that is submerged in water in the downstream part 92 of the water tray 90 can stepwise be increased, a water impregnated area can stepwise be increased from the upstream side toward the downstream side, and the quantity of humidification can stepwise be increased according to increase in the quantity of air flow through the air cleaning filter unit 30 (see Fig. 2), so that the quantity of humidification can be adjusted.

In the embodiment, the water escape can be prevented because the area at the lower ends 701, 702, 703 of the humidifying member 700 that is submerged in the water increases stepwise from the upstream side toward the downstream side with respect to the air flow A2, and because the downstream side of the humidifying member 700 in the thickness direction resists being impregnated with water.

The heights of the lower ends of the humidifying member, however, may be made to increase stepwise from the downstream side toward the upstream side along the thickness direction that is the direction of passage of air, though not shown.

### REFERENCE SIGNS LIST

- 1: casing
- 3: front panel
- 5: suction opening
- 6: blow-off opening
- 10: water tank
- 11: rear surface
- 12: slant surface
- 20: fan
- 23: bell mouth
- 30: air cleaning filter unit
- 31: prefilter
- 32: ionization part
- 33: dust collection filter
- 34: deodorizing filter
- 40: humidifying rotor
- 50: partition plate
- 51: non-humidifying passage
- 52: humidifying passage
- 60: water sprinkling device
- 61: bucket part
- 62: inner surface
- 62a: edge
- 65: rotation frame
- 74: geared motor
- 75: holder part
- 78: wall part
- 79: gear
- 81: opening
- 90: water tray
- 91: partition wall
- 92: draw-up part
- 93: non-draw-up part
- 95: slot
- 99: buffer water container part
- 101: cutout
- 300, 400, 500, 600, 700: humidifying member

## Claims

1. A humidifying device comprising:
a casing (1) having suction openings (5) and a blow-off opening (6),
a water tank (10) provided in the casing (1),
a fan (20) provided in the casing (1),
a humidifying member (40, 300, 400, 500, 600, 700) for performing humidification for air flow produced by the fan (20),
an air cleaning filter unit (30) provided on upstream side of the humidifying member (40, 300, 400, 500, 600, 700) in the casing (1) with respect to the air flow, and
a water tray (90) that is provided under the humidifying member (40, 300, 400, 500, 600, 700) and the air cleaning filter unit (30) and that receives water from the water tank (10),
the water tray (90) comprising:
a downstream part (92) that supplies the humidifying member (40, 300, 400, 500, 600, 700) with the water and that is subjected to an air pressure on downstream side of the air cleaning filter unit (30),
an upstream part (93) that is subjected to an air pressure on upstream side of the air cleaning filter unit (30),
a partition wall (91) for attaining partition between the downstream part (92) and the upstream part (93), and
a water passage hole (95) provided on lower part of the partition wall (91).

2. The humidifying device as claimed in Claim 1, the humidifying device further comprising:
a water sprinkling device (60) that is formed of a rotation frame (65) provided with bucket parts (61) for drawing up the water from the downstream part (92) of the water tray (90) and that sprinkles the water on the humidifying member (40) from openings (81) of the bucket parts (61), and
a motor (74) for rotating the rotation frame (65) of the water sprinkling device (60).

3. The humidifying device as claimed in Claim 1 or 2, wherein
the water passage hole on the partition wall (91) of the water tray (90) comprises a horizontally long slot (95).

4. The humidifying device as claimed in Claim 1, the humidifying device further comprising:
a buffer water container part (99) into which the water flows from the upstream part (93) of the water tray (90) once a water level in the upstream part (93) has a height not less than a predetermined value.

5. The humidifying device as claimed in Claim 1, wherein
lower part of the humidifying member (40, 300, 400, 500, 600, 700) can be immersed in the water in the downstream part (92) of the water tray (90).

6. The humidifying device as claimed in Claim 1, wherein
lower part of the humidifying member (40) is immersed in the water in the downstream part (92) of the water tray (90), and wherein
the humidifying member (40) can be rotated,
the humidifying device further comprising a motor for rotating the humidifying member (40).

7. The humidifying device as claimed in Claim 2, wherein
lower part of the humidifying member (40) is immersed in the water in the downstream part (92) of the water tray (90) when a rotation velocity of the fan (20) is higher than a predetermined set value.

8. The humidifying device as claimed in Claim 7, wherein
the humidifying member (40) is mounted in the rotation frame (65) so as to rotate together with the rotation frame (65).

9. The humidifying device as claimed in Claim 5, wherein
the humidifying member (300) comprises a plurality of separable parts (301, 302, 303), and wherein the plurality of parts (301, 302, 303) differ in height of lower ends thereof.

10. The humidifying device as claimed in Claim 5, wherein
the humidifying member (40, 300, 400, 500) has different heights of lower ends thereof along a transversal direction that is a horizontal direction orthogonal to a direction of passage of air.

11. The humidifying device as claimed in Claim 10, wherein
the heights of the lower end of the humidifying member (40, 400) continuously vary along the transversal direction.

12. The humidifying device as claimed in Claim 5, wherein
heights of a lower end of the humidifying member (600, 700) differ along a thickness direction that is a direction of passage of air.
